# EUROPEAN PATENT SPECIFICATION

(11) **EP 4 050 045 B1**
(45) Date of publication and mention of the grant of the patent: **25.10.2023**
(21) Application number: 21159645.7
(22) Date of filing: 26.02.2021
(51) Int. Cl.: C08F 220/18, C08F 290/06, C09J 4/00, C09J 4/06

(54) **AN ACRYLIC PRESSURE SENSITIVE ADHESIVE AND USE THEREOF FOR PROVIDING SELF-ADHERING SEALING DEVICES**
ACRYLHAFTKLEBER UND VERWENDUNG DAVON ZUR HERSTELLUNG VON SELBSTKLEBENDEN DICHTUNGSVORRICHTUNGEN
ADHÉSIF ACRYLIQUE SENSIBLE À LA PRESSION ET SON UTILISATION POUR FOURNIR DES DISPOSITIFS D'ÉTANCHÉITÉ AUTO-ADHÉSIFS

(43) Date of publication of application: 31.08.2022
(73) Proprietor: Sika Technology AG, 6340 Baar (CH)
(72) Inventor: HAUFE, Markus, 8048 Zürich (CH); GUT, Cyrill, 8820 Wädenswil (CH); DESMORTREUX, Charlene, 8004 Zürich (CH)
(74) Representative: Sika Patent Attorneys

(56) References cited:
- WO-A1-2017/104314
- KR-A- 20140 121 093
- US-A1- 2004 084 138
- US-A1- 2005 176 842
- US-A1- 2007 088 145
- US-A1- 2021 017 381

## Description

### Technical field

The invention according to the appended claims relates to the field of acrylic pressure sensitive adhesives and their production methods. The invention also relates to self-adhering sealing devices, which are used for waterproofing of below and above ground building structures.

### Background of the invention

In the field of construction polymeric sheets, which are often referred to as membranes or panels, are used to protect underground and above ground constructions, such as basements, tunnels, or roofs against penetration of water. Waterproofing membranes are applied, for example, to prevent ingress of water through cracks that develop in the concrete structure due to building settlement, load deflection or concrete shrinkage. Roofing membranes are commonly used for waterproofing of flat and low-sloped roof structures. Waterproofing membranes are also used in form of tapes for sealing and waterproofing of construction gaps in building facades, for example gaps between a building structure and window or curtain wall components.

Membranes can be provided with a pre-applied layer of a pressure sensitive adhesive, which is covered with a release liner to prevent premature unwanted adhesion and to protect the adhesive from moisture, fouling, and other environmental factors. At the time of use the release liner is removed and the membrane is secured to the substrate to be waterproofed without the use of additional adhesives. Waterproofing and roofing membranes having a pre-applied adhesive layer covered by release liner are also known as "peel and stick membranes" or "self-adhering membranes". Single- and double-sided adhesive tapes comprising a carrier layer and adhesive layers(s) coated on the surface of the carrier layer, are also used in wide variety of waterproofing applications. The substrate on which the membrane or tape is adhered may be comprised of variety of materials depending on the installation site. The substrate may, for example, be a concrete, fiber concrete, metal, or a plywood substrate, or it may include an insulation board or recover board and/or an existing membrane.

Suitable adhesives for self-adhering membranes and adhesive tapes include, in particular, pressure sensitive adhesives (PSA). These are viscoelastic materials, which adhere immediately to almost any kind of substrates by application of light pressure and which are permanently tacky. Commonly available pressure sensitive adhesives include adhesives based on acrylic polymers, styrene block copolymers, amorphous polyolefins (APO), amorphous poly-alpha-olefins (APAO), vinyl ether polymers, bitumen, and rubbers.

Acrylic pressure sensitive adhesives comprising acrylic polymers can be provided as a water-based or solvent-based adhesive, or as a hot-melt adhesive. Water- and solvent based adhesives are applied on a surface as a wet film, which is then dried by allowing the volatile components (water, organic solvent) to evaporate. Hot-melt adhesives must be heated above the melting point of the adhesive to obtain a melt, which is then applied on a surface and allowed to cool and solidify. Acrylic pressure sensitive adhesives can also be provided as monomer mixtures, also known as monomer syrups, which contain acrylic monomers, such as alkyl esters of acrylic acid, as the main monomer component. The monomer mixture is applied to a carrier as a film followed by curing of the acrylic monomers. The cured adhesive containing acrylic polymers can further be crosslinked to improve the mechanical properties of the adhesive film. The monomer mixture can be chemically cured, for example, by using a thermally activated free radical initiator, such as a peroxide, or cured by radiation using a photoinitiator.

The viscosity of the acrylic monomer mixture should be low enough to enable effective wetting of the surface of a carrier to be coated. On the other hand, the viscosity of the monomer mixture also limits the thickness of the coating, which can be deposited in one pass to a surface of the carrier. Typically, the viscosity of an acrylic monomer mixture is too low for a conventional coating process, such as for coating lines operated with coating knives, especially if high coating weights are used. Three different approaches have commonly been used for increasing the viscosity of an acrylic monomer mixture. Suitable high molecular weight polymers can be dissolved in the monomer mixture to increase the viscosity to a desired level. The monomer mixture can also be subjected to an UV-radiation induced pre-polymerization reaction to obtain reaction product with high molecular weight acrylic polymers. The viscosity of the monomer mixture can also be increased by using inorganic and organic rheology modifiers, which are commercially available, for example, from BASF, Byk, and Evonik Industries. However, all known technical solutions come up with some disadvantages. High molecular weight polymers are solid at standard room temperature and dissolving them into acrylic monomer mixtures requires separate melting and dosing steps, which increase the complexity of the coating process. Pre-polymerization reactions are difficult to control and are, therefore, mainly used only in small scale production processes. Furthermore, the use of rheology additives is not always effective and can also result in thixotropic compositions rather than solutions with Newtonian characteristics.

Documents US 2004/084138 A1, US 2005/176842 A1, US 2007/088145 A1, WO 2017/104314 A1, KR 2014 0121093 A, US 2021/017381 A1 describe further adhesive compositions based on acrylic compounds (e.g. monomer or polymers), urethane oligomers/polymers from the reaction of polyisocyanate compounds with polyols, and photo-initiators.

There thus remains a need for a novel acrylic pressure sensitive adhesive, which enables providing self-adhering sealing devices that can be produced by a simplified industrial manufacturing process.

### Summary of the invention

The objective of the present invention is to provide an improved acrylic-based pressure sensitive adhesive and a preparation method therefor that is able to solve or at least mitigate the problems associated with the acrylic pressure sensitive adhesives of prior art.

The subject of the present invention is an adhesive composition as defined in claim 1.

It was surprisingly found out that the viscosity of an acrylic monomer mixture can be effectively increased by using a method including in-situ formation of high molecular weight polymers by reacting easy-to-handle low-molecular weight isocyanate-functional polymers with hardeners containing isocyanate-reactive groups. After the viscosity increase, the acrylic monomer mixture can be easily applied on a surface of a substrate using common coating techniques, such as a line-coating process.

One of the advantages of the adhesive composition of the invention is that the viscosity of the acrylic monomer mixture can be increased without use of conventional techniques, such as dissolving high molecular weight polymers into the monomer mixture or UV-radiation induced pre-polymerization. This reduces the time needed for production and coating of the acrylic adhesive and enables the use of simplified process equipment since no separate heating and/or UV-precuring steps are needed. Furthermore, the use of the in-situ formed high molecular weight polymers does not significantly increase the raw material costs of the final adhesive composition.

Other aspects of the present invention are presented in other independent claims. Preferred aspects of the invention are presented in the dependent claims.

### Brief description of the Drawings

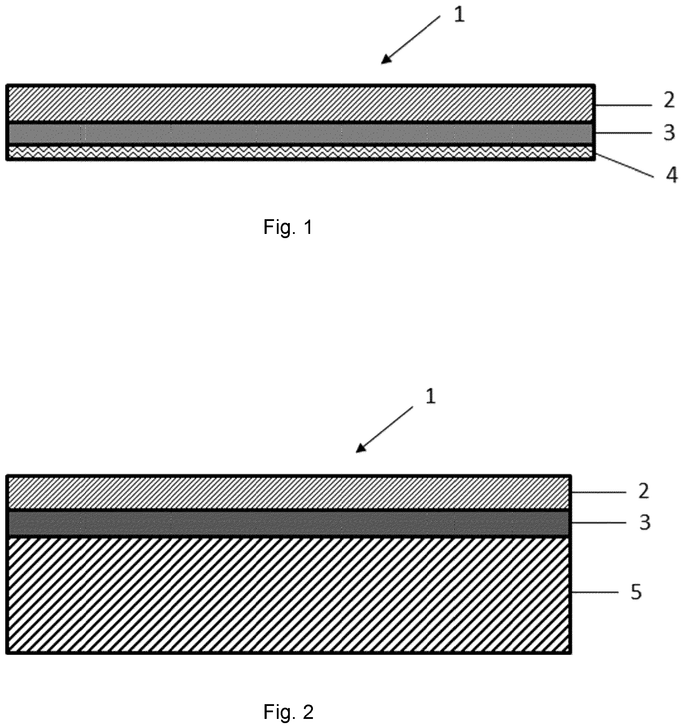

Fig. 1 shows a cross-section of a sealing device (1) comprising a carrier layer (2), an adhesive layer (3) covering the second major surface of the carrier layer (3), and a release liner (4) covering the outer surface of the adhesive layer (3) on the side opposite to the carrier layer (2).
Fig. 2 shows a cross-section of a waterproofed substrate (5) comprising a sealing device (1) comprising a carrier layer (2) and an adhesive layer (3), wherein the carrier layer is adhered to the surface of the substrate (5) via the adhesive layer (3).

### Detailed description of the invention

The subject of the present invention, according to appended claim 1, is an adhesive composition comprising
a) a) At least one acrylic compound A,
b) A reaction product RP obtained by polyaddition reaction of at least one compound P and at least one hardener H, and c) At least one free radical initiator I,
wherein the at least one acrylic compound A comprises at least 60 wt.-% of the total weight of the adhesive composition and the at least one compound P contains first type of functional group(s) that that react with second type of functional group(s) contained in the at least one hardener H in the polyaddition reaction and wherein the polyaddition reaction between the at least one compound P and the at least one hardener H is conducted at a molar ratio of the first type of functional group to the second type of functional group of 0.95 1.5, and wherein the reaction product RP has a weight average molecular weight (Mw) determined by gel permeation chromatography using polystyrene as standard of at least 15000 g/mol.

The prefix "poly" in substance designations such as "polyol" or "polyisocyanate" refers to substances which in formal terms contain two or more per molecule of the functional group that occurs in their designation. A polyol, for example, is a compound having two or more hydroxyl groups, and a polyisocyanate is a compound having two or more isocyanate groups.

The term "polymer" refers to a collective of chemically uniform macromolecules produced by a polyreaction (polymerization, polyaddition, polycondensation) where the macromolecules differ with respect to their degree of polymerization, molecular weight, and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "oligomer" designates a compound built up through the linkage of a few monomers, for example dimers, trimers, tetramers and other polymeric materials. Term "polyisocyanate oligomer" can designate an individual oligomer or a mixture of oligomers of diisocyanates, wherein these oligomers can be built up of like or different diisocyanates.

An amine or an isocyanate is called "aliphatic" when its amine group or its isocyanate group, respectively, is directly bound to an aliphatic, cycloaliphatic or arylaliphatic moiety. The corresponding functional group is therefore called an aliphatic amine or an aliphatic isocyanate group, respectively.

An amine or an isocyanate is called "aromatic" when its amine group or its isocyanate group, respectively, is directly bound to an aromatic moiety. The corresponding functional group is therefore called an aromatic amine or an aromatic isocyanate group, respectively.

The term "molecular weight" refers to the molar mass (g/mol) of a molecule or a part of a molecule, also referred to as "moiety". The term "average molecular weight" can refer to weight or number average molecular weight (Mₙ, M_{w}) of an oligomeric or polymeric mixture of molecules or moieties. The molecular weight can be determined by conventional methods, preferably by gel permeation-chromatography (GPC) using polystyrene as standard, styrene-divinylbenzene gel with porosity of 100 Angstrom, 1000 Angstrom and 10000 Angstrom as the column, and, depending on the molecule, tetrahydrofurane as a solvent, at 35 °C, or 1,2,4-trichlorobenzene as a solvent, at 160 °C.

The term "melting temperature" refers to a temperature at which a material undergoes transition from the solid to the liquid state. The melting temperature (Tₘ) is preferably determined by differential scanning calorimetry (DSC) according to ISO 11357-3 standard using a heating rate of 2 °C/min. The measurements can be performed with a Mettler Toledo DSC 3+ device and the Tₘ values can be determined from the measured DSC-curve with the help of the DSC-software. In case the measured DSC-curve shows several peak temperatures, the first peak temperature coming from the lower temperature side in the thermogram is taken as the melting temperature (Tₘ).

The term "glass transition temperature" (T_{g}) refers to the temperature above which temperature a polymer component becomes soft and pliable, and below which it becomes hard and glassy. The glass transition temperature is preferably determined by dynamical mechanical analysis (DMA) as the peak of the measured loss modulus (G") curve using an applied frequency of 1 Hz and a strain level of 0.1 %.

The "amount or content of at least one component X" in a composition, for example "the amount of the at least one acrylic compound A" refers to the sum of the individual amounts of all acrylic compounds A contained in the composition. Furthermore, in case the composition comprises 20 wt.-% of at least one acrylic compound A, the sum of the amounts of all acrylic compounds A contained in the composition equals 20 wt.-%.

The term "standard room temperature" designates a temperature of 23 °C.

The adhesive composition of the present invention is preferably a pressure sensitive adhesive composition. The term "pressure sensitive adhesive" refers in the present disclosure to viscoelastic materials, which adhere immediately to almost any kind of substrates by application of light pressure and which are permanently tacky. The tackiness of an adhesive layer can be measured, for example, as a loop tack. Preferably, the adhesive composition has a loop tack adhesion to a glass plate measured at a temperature of 23 °C of at least 2.5 N/25 mm, preferably at least 5 N/25 mm, more preferably at least 10 N/25 mm. The loop tack adhesion can be measured using a "FINAT test method no. 9" (FTM 9) as defined in FINAT Technical Handbook, 9th edition, published in 2014.

Preferably, the adhesive composition is liquid at standard room temperature.

According to one or more embodiments, the adhesive composition has a melting temperature (Tₘ) determined by differential scanning calorimetry (DSC) according to ISO 11357-3:2018 standard using a heating rate of 2 °C/min of at or below 25 °C, preferably at or below 20°C, more preferably at or below 15 °C and/or a pour point determined according to ISO 3016:2019 standard of at or below 25 °C, preferably at or below 15 °C.

Preferably, the adhesive composition may have a viscosity at 20 °C measured according to ISO 3219:1994 standard of at least 50 mPa s, more preferably at least 100 mPa s, even more preferably at least 250 mPa s, still more preferably at least 500 mPa s, most preferably at least 750 mPa s. The viscosity of the adhesive composition can be determined by using a rotational viscometer at 5 revolutions per minute, for example by using Anton Paar Physica MCR rheometer.

According to one or more embodiments, the adhesive composition has a viscosity at 20 °C measured according to ISO 3219:1994 standard in the range of 100 - 10000 mPa s, preferably 125 - 8500 mPa s. Adhesive compositions having a viscosity falling within the above cited ranges have been found to be especially suitable for use in industrial scale coating processes.

The adhesive composition of the present invention contains as a first essential component at least one acrylic compound A. The term "acrylic compound" refers to compounds having at least one (meth)acryloyl group in the molecule. The term "(meth)acryloyl" designates methacryloyl or acryloyl. Accordingly, "(meth)acrylic" designates methacrylic or acrylic. A (meth)acryloyl group is also known as (meth)acryl group.

Examples of suitable acrylic compounds A include acrylic monomers, such as (meth)acrylates, alkyl(meth)acrylates, di(meth)acrylates, and derivatives thereof, for example, amides and nitriles of (meth)acrylates. The term "monomer" refers in the present disclosure to single, discreet molecule which is capable of combining to form polymers.

Further suitable acrylic compounds A include (meth)acryl-functional polymers, such as (meth)acrylate, polyurethane, polyether/polyoxyalkylene, and polyester polymers containing one or more (meth)acryl groups. The (meth)acryl groups of an (meth)acryl-functional polymer may be in pendant positions in the polymer chain or in terminal positions.

In the present invention, the at least one acrylic compound A comprises at least 60 wt.-%, most preferably at least 65 wt.-%, of the total weight of the adhesive composition.

According to one or more embodiments, the at least one acrylic compound A contains exactly one acryl group.

The at least one acrylic compound A may have a weight average molecular weight (M_{w}) of not more than 25000 g/mol, more preferably not more than 15000 g/mol, even more preferably not more than 10000 g/mol.

The at least one acrylic compound A may have a weight average molecular weight (M_{w}) in the range of 100 - 15000 g/mol preferably 125 - 10000 g/mol, more preferably 125 - 7500 g/mol, even more preferably 125 - 5000 g/mol and/or a viscosity at 20 °C determined according to ISO 3219:1994 standard in the range of 250 - 25000 mPa·s, preferably 500 - 20000 mPa·s, more preferably 1000- 15000 mPa·s, even more preferably 1500 - 15000 mPa s.

The at least one acrylic compound **A** can be a monofunctional compound or a polyfunctional compound containing other functional groups than (meth)acryl groups, such as hydroxyl groups, isocyanate groups, or amine groups. It may be, however, preferred that the polyaddition reaction of the at least one compound **P** with the at least one hardener **H** is conducted or at least initiated in the absence of acrylic compounds containing isocyanate groups or isocyanate-reactive groups.

The at least one acrylic compound **A** may comprise at least one first acrylic compound **A1** that does not contain other functional groups than (meth)acryl group(s). Generally, the expression "the at least one component **X** comprises at least one component **XN",** such as "the at least one compound **A** comprises at least one first acrylic compound **A1"** is understood to mean in the context of the present disclosure that the adhesive composition comprises one or more acrylic compounds **A1** that do not contain other functional groups than (meth)acryl group(s) as representatives of the at least one acrylic compound **A.**

Preferably, the at least one first acrylic compound **A1** comprises at least 35 wt.-%, more preferably at least 50 wt.-%, even more preferably at least 65 wt.-%, still more preferably at least 75 wt.-%, most preferably at least 85 wt.-%, of the total weight of the at least one acrylic compound **A.**

The
at least one first acrylic compound **A1** may be an acrylic monomer of formula (I): 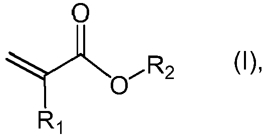 where
R₁ is hydrogen or a hydrocarbyl moiety; and
R₂ is a hydrocarbyl moiety, optionally containing one or more heteroatoms.

Or R₁ is hydrogen or methyl and R₂ is a hydrocarbyl moiety selected from the group consisting of alkyl, cycloalkyl, substituted cycloalkyl, alkenyl, cycloalkenyl, substituted cycloalkenyl, aryl, substituted aryl, aralkyl, alkaryl, allyl, and alkynyl groups, optionally containing one or more heteroatoms, preferably selected from the group consisting of nitrogen, oxygen, boron, silicon, sulfur, and phosphorus atoms.

Examples of suitable acrylic monomers of formula (I) include alkyl (meth)acrylates, for example, methyl acrylate, methyl methacrylate, ethyl acrylate, n-butyl acrylate, n-butyl methacrylate, n-pentyl acrylate, n-hexyl acrylate, n-heptyl acrylate, n-octyl acrylate, n-octyl methacrylate, n-nonyl acrylate, lauryl acrylate, stearyl acrylate, behenyl acrylate, and their branched isomers, for example, isobutyl acrylate, 2-ethylhexyl acrylate, 2-ethylhexyl methacrylate, isooctyl acrylate, isooctyl methacrylate, cyclohexyl methacrylate, isobornyl acrylate, isobornyl methacrylate, and 3,5-dimethyladamantyl acrylate, glycol(meth)acrylate, 2-(2-ethoxyethoxy) ethyl acrylate, 2[2-(2-ethoxyhexyloxy)ethoxy] ethyl acrylate, ethylene glycol di(meth)acrylate, tetraethylene glycol di(meth)acrylate, 2-phenoxyethyl acrylate, 2-phenoxyethyl methacrylate, alkoxylated lauryl acrylate, alkoxylated phenol acrylate, polyethylene glycol (PEG) (meth)acrylates, polypropylene glycol (PPG) (meth)acrylates, methoxy polyethylene glycol (MPEG) (meth)acrylates, and polyethylene glycol polypropylene glycol (PEG/PPG) copolymer or block copolymer (meth)acrylates.

Acrylic monomers that are known to polymerize to homopolymers having a low T_{g}, such as of below 0 °C, particularly below -10 °C, are generally preferred for use in acrylic pressure sensitive adhesives. However, acrylic monomers that are known to yield homopolymers having a high T_{g} can also be used in small amounts as comonomers, for example, to enhance certain adhesive properties, for example to reduce cold creep and increase shear resistance of the pressure sensitive adhesive composition. Acrylic monomers of formula (I) that are suitable for use as comonomers in relatively small amounts include, for example, isobornyl acrylate, isobornyl methacrylate, and 4-acryloylmorpholine.

The at least one first acrylic compound **A1** may comprise not more than 50 wt.-%, preferably not more than 35 wt.-%, more preferably not more than 25 wt.-%, even more preferably not more than 15 wt.-%, based on the total weight of the at least one first acrylic compound **A1,** of acrylic monomers of formula (I) that polymerize to homopolymers having a T_{g} of at or above 0 °C, preferably at or above -10 °C.

The at least one acrylic monomer of formula (I) may be selected from the group consisting of ethylhexyl acrylate, butyl acrylate, and ethoxyethoxy ethyl acrylate.

The at least one acrylic compound **A** further may comprise at least one second acrylic compound **A2** containing other functional groups than (meth)acryl groups.

The at least one second acrylic compound **A2** may be a difunctional compound containing one (meth)acryl group and one other functional group, preferably selected from the group consisting of hydroxyl, isocyanate, amine, silane, thiol, and carboxyl groups.

Suitable acrylic compounds for use as the at least one second acrylic compound **A2** include, for example, hydroxyethyl (meth)acrylate, hydroxypropyl (meth)acrylate, tert-Butylaminoethyl (meth)methacrylate, HEMA phosphate (2-hydroxyethylmethacrylate acid phosphate), and (meth)acryl-functional silanes, such as 3-Trimethoxysilylpropyl-methacrylate.

The at least one second acrylic compound **A2** may comprise not more than 45 wt.-%, preferably not more than 35 wt.-%, more preferably not more than 25 wt.-%, such as 0.1 - 20 wt.-%, preferably 1 - 15 wt.-%, of the total weight of the at least one acrylic compound **A.**

The adhesive composition according to the appended claims further comprises as a second essential component a reaction product **RP** obtained by polyaddition reaction of at least one compound **P** and at least one hardener **H.** As used herein, the term "polyaddition reaction" refers to a reaction in which new bonds are formed by undergoing an addition reaction among functional groups of the compound having a functional group and the aforesaid reaction is successively repeated to form a polymer. Consequently, the at least one compound **P** contains first type of functional group(s) that that react with second type of functional group(s) contained in the at least one hardener **H** in the polyaddition reaction.

Suitable first type of functional groups include, for example, isocyanate groups, epoxy groups, (meth)acryl groups, acid anhydride groups, and Michael acceptors. Suitable second type of functional groups include, for example, amine groups, hydroxyl groups, thiol groups, and Michael donors.

The reaction product **RP** comprises all reaction products that are produced in the reactions between the at least one compound **P** and the at least one hardener **H**, including any unconverted reactants. Particularly, if the polyaddition reaction is conducted in the presence of further compounds that are not reacted in the polyaddition reaction, these are not considered to form a part of the reaction product **RP.** It may be preferred that polyaddition reaction is conducted in a reaction mixture that contains at least a portion of the at least one acrylic compound **A**, particularly at least a portion of the at least one first acrylic compound **A1,** i.e. that the polyaddition reaction of the at least one compound **P** with the at least one hardener **H** is conducted in the presence of the at least one acrylic compound **A**, particularly in the presence of the at least one first acrylic compound **A1.** In this case the at least one compound **P** and/or the at least one hardener **H** are preferably first dissolved in at least a portion of the total amount of the at least one acrylic compound **A**, particularly in at least a portion of the total amount of the at least one first acrylic compound **A1,** which is then present in the reaction mixture as a solvent.

The polyaddition is preferably conducted such that the first type of functional groups of the at least one compound **P** in the reaction mixture are not in high stoichiometric excess over the second type of functional groups of the at least one hardener **H**, or vice versa. In case of a substantial stoichiometric excess of the first type of functional groups of the at least one compound **P** or the second type of functional groups of the at least one hardener **H,** the reaction product **RP** would contain unreacted compounds with first type of functional groups or unreacted compounds with second type of functional groups, respectively. Reaction products **RP** containing substantial amount of unreacted reactants are generally not preferred since they tend to decrease the viscosity of the adhesive composition.

According to one or more embodiments, the polyaddition reaction between the at least one compound **P** and the at least one hardener **H** is conducted at a molar ratio of the first type of functional groups to the second type of functional groups of 0.95 - 1.5, preferably 0.97 - 1.2, more preferably 0.97 - 1.1, even more preferably 0.97 - 1.05. The polyaddition reaction between the at least one compound **P** and at least one hardener **H** can be conducted at a temperature in the range of 10 - 80 °C, preferably 15 - 70 °C, optionally in the presence of a catalyst.

According to one or more embodiments, the reaction product **RP** has:
- a weight average molecular weight (M_{w}) of at least 15000 g/mol, more preferably at least 25000 g/mol and/or
- a number average molecular weight (Mₙ) of at least 1000 g/mol, preferably at least 1500 g/mol, more preferably at least 2500 g/mol and/or
- a polydispersity index D of not more than 150, preferably not more than 125.

The average molecular weights M_{w} and Mₙ are preferably determined by gel permeation-chromatography (GPC) using polystyrene as standard, styrene-divinylbenzene gel with porosity of 100 Angstrom, 1000 Angstrom and 10000 Angstrom as the column having dimensions of 0.8 x 30 cm, 5 µm, and tetrahydrofurane as a solvent using a flow of 1 mL/min at a temperature of 35 °C.

Preferably, the reaction product **RP** comprises not more than 75 wt.-%, more preferably not more than 65 wt.-%, even more preferably not more than 55 wt.-%, still more preferably not more than 45 wt.-%, of the total weight of the adhesive composition.

The reaction product **RP** may comprise 1.5
- 55 wt.-%, preferably 2.5 - 45 wt.-%, more preferably 5-40 wt.-%, even more preferably 7.5 - 35 wt.-%, still more preferably 7.5 - 30 wt.-%, most preferably 10- 30 wt.-%, of the total weight of the adhesive composition.

According to one embodiment, the at least one compound P has a weight average molecular weight (M_{w}) of not more than 15000 g/mol, more preferably not more than 10000 g/mol.

The at least one compound **P** may have:
- a weight average molecular weight (M_{w}) in the range of 100 - 15000 g/mol, preferably 150 - 10000 g/mol, more preferably 200 - 7500 g/mol, even more preferably 200 - 5000 g/mol and/or
- a viscosity at 20 °C determined according to ISO 3219:1994 standard in the range of 250 - 25000 mPa·s, preferably 500 - 20000 mPa s, more preferably 1000- 15000 mPa·s, even more preferably 1500 - 15000 mPa s.

According to one or more embodiments, the at least one compound **P** contains isocyanate groups, i.e. the first type of functional groups of the at least one compound **P** are isocyanate groups and the at least one hardener contains isocyanate-reactive groups, i.e. the second type of functional groups of the at least one hardener **H** are isocyanate-reactive groups.

According to one or more embodiments, the polyaddition reaction between the at least one compound **P** and the at least one hardener **H** is conducted at a molar ratio of the isocyanate groups to the isocyanate-reactive groups of 0.95 - 1.5, preferably 0.97 - 1.2, more preferably 0.97 - 1.1, even more preferably 0.97 - 1.05.

Suitable compounds containing isocyanate groups for use as the at least one compound **P** include, for example, polymers containing isocyanate groups (prepolymers) and polyisocyanates, such as monomeric diisocyanates and oligomers, polymers, and derivatives of monomeric diisocyanates and mixtures thereof.

According to one or more embodiments, the at least one compound P has:
- an average isocyanate-functionality determined according to ISO 14896-2009 standard method A in the range of 1.2 - 2.7, preferably 1.5 - 2.5, more preferably 1.7 - 2.2, even more preferably 1.9 - 2.1 and/or
- an isocyanate content determined according to ISO 11909:2007 standard in the range of 0.3 - 35 wt.-%, preferably 1.0 - 30 wt.-%, more preferably 1.5 - 25 wt.-%, even more preferably 2.5 - 20 wt.-%.

According to one or more embodiments, the at least one compound **P** comprises at least one organic polymer **P1** containing isocyanate groups and/or at least one polyisocyanate **P2.**

The term "organic polymer" encompasses in the present disclosure a collective of macromolecules that are chemically homogeneous but differ in relation to degree of polymerization, molar mass and chain length, which have a majority of carbon atoms in the polymer backbone, and reaction products of such a collective of macromolecules. The isocyanate groups of the organic polymer **P1** may be in pendant positions in the polymer chain or in terminal positions and are bonded to the organic polymer via a carbon atom. Polymers having a polyorganosiloxane backbone (commonly referred to as "silicones") are not organic polymers in the context of the present disclosure.

Examples of suitable organic polymers **P1** include, for example, polyurethane, polyolefin, polyether, polyester, polycarbonate, polyamide, poly(meth)acrylate, polyurea, polyester-polyurea, polyisocyanurate, and polycarbodiimide polymers containing isocyanate groups.

The at least one at least one organic polymer **P1** may have:
- a weight average molecular weight (M_{w}) in the range of 300 - 20000 g/mol, preferably 350 - 15000 g/mol, more preferably 450 - 12500 g/mol, even more preferably 500 - 8000 g/mol and/or
- a viscosity at 20 °C determined according to ISO 3219:1994 standard in the range of 250 - 25000 mPa·s, preferably 500 - 20000 mPa s, more preferably 1000- 15000 mPa·s, even more preferably 1500 - 15000 mPa·s.

Suitable compounds for use as the at least one polyisocyanate **P2** include, for example, monomeric diisocyanates. A monomeric diisocyanate contains no urethane groups and dimers, trimers, oligomers, and polymerization products or adducts of diisocyanate monomers are not monomeric diisocyanates. Monomeric diisocyanates having a number average molecular weight (Mₙ) of not more than 1000 g/mol, preferably not more than 500 g/mol, more preferably not more than 350 g/mol, are especially suitable for use as the at least one polyisocyanate **P2.**

Suitable monomeric diisocyanates include aromatic and aliphatic monomeric diisocyanates, such as 4,4'-diphenylmethane diisocyanate, optionally with proportions of 2,4'- and / or 2,2'-diphenylmethane diisocyanate (MDI), 2,4-tolylene diisocyanate or mixtures with 2,6-tolylene diisocyanate (TDI), 1,4-phenylene diisocyanate (PDI), naphthalene-1,5-diisocyanate (NDI), 1,6-hexane diisocyanate (HDI), 2,2(4),4-trimethyl-1,6-hexamethylendiisocyanate (TMDI), cyclohexane-1, 3- or -1, 4-diisocyanate, 1-isocyanato-3,3,5-trimethyl-5-isocyanatomethylcyclohexane (isophorone diisocyanate or IPDI), perhydro-2,4'- or -4,4'-diphenylmethandiisocyanate (HMDI), 1,3- or 1,4-bis(isocyanatomethyl) cyclohexane, m- or p-xylylene diisocyanate (XDI), m-tetramethylxylylene diisocyanate (TMXDI ), or mixtures thereof.

Further suitable compounds for use as the at least one polyisocyanate **P2** include oligomers, polymers, and derivatives of monomeric diisocyanates containing isocyanurate, iminooxadiazindione, biuret, allophanate, carbodiimide, uretonimine or oxadiazine-trione groups and having an average isocyanate-functionality determined according to ISO 14896-2009 standard method A in the range of 1.2 - 2.7, preferably 1.5 - 2.5, more preferably 1.7 - 2.2, even more preferably 1.9 - 2.1.

The at least one organic polymer **P1** containing isocyanate groups may comprise at least 50 wt.-%, preferably at least 65 wt.-%, more preferably at least 75 wt.-%, even more preferably at least 85 wt.-%, of the total weight of the at least one compound **P.**

The at least one organic polymer **P1** may be an isocyanate-functional polyurethane polymer.

The term "polyurethane polymer" refers in the present disclosure to polymers prepared by so called diisocyanate polyaddition process. Examples of particularly suitable polyurethane polymers include polyether polyurethanes and polyester polyurethanes. The terms "isocyanate-functional polyurethane polymer" and "polyurethane pre-polymer" can be used interchangeably.

The isocyanate-functional polyurethane polymer is preferably obtained by reacting at least one polyol **PO** with at least one polyisocyanate **PI**, wherein the isocyanate groups (NCO) are used in significant stoichiometric excess to hydroxyl groups (OH). The reaction can be carried out via known methods, with exclusion of moisture at a temperature of 20 - 160 °C, preferably 40 - 140 °C, optionally in the presence of suitable catalysts, with metered addition of the polyisocyanate in such a way that the isocyanate groups thereof are present in the specified stoichiometric excess in relation to the hydroxyl groups of the polyol.

Particularly suitable polyols to be used as the at least one polyol **PO** include polyether polyols, polyester polyols, polycarbonate polyols, poly(meth)acrylate polyols, and hydrocarbon polyols, such as polybutadiene polyols, polyhydroxy functional fats and oils, and polyhydroxy functional acrylonitrilie/butadiene copolymers. Preferred polyether polyols **PO** are polyoxypropylene polyols and polyoxypropylene polyoxyethylene polyols, particularly the diols.

Suitable polyisocyanates **PI** for use with the at least one polyol **PO** to obtain isocyanate-functional polyurethane polymers include monomeric di- and tri-functional isocyanates, as well as oligomers, polymers, and derivatives of monomeric di-functional isocyanates, and mixtures thereof.

Suitable aromatic di- and tri-functional isocyanates include 2,4- and 2,6-toluylendiisocyanate and mixtures of its isomers (TDI), 4,4'-, 2,4'- and 2,2'-diphenylmethandiisocyanate and mixture of its isomers (MDI), 1,3- and 1,4-phenylendiisocyanate, 2,3,5,6-tetramethyle-1,4-diisocyanatobenzol, naphthaline-1,5-diisocyanate (NDI), 3,3'-dimethyl-4,4'-diisocyanatodiphenyl (TODI), dianisidindiisocyanate (DADI), 1,3,5tTris-(isocyanatomethyl)benzol, tris-(4-isocyanatophenyl)methane and tris-(4-isocyanatophenyl)thiophosphat.

Suitable aliphatic di- and tri-functional isocyanates include 1,4-tetramethylendiisocyanat, 2-methylpentamethylene-1,5-diisocyanate, 1,6-hexamethylendiisocyanate (HDI), 2,2,4- and 2,4,4-trimethyl-1,6-hexa-methylendiisocyanate (TMDI), 1,10-decamethylendiisocyanate, 1,12-dodecame-thylendiisocyanat, lysin- and lysinesterdiisocyanate, cyclohexane-1,3- and -1,4-diisocyanate, 1-methyl-2,4- and -2,6-diisocyanatocyclohexane and mixtures of its isomers (HTDI or H6TDI), 1-isocyanato-3,3,5-trimethyl-5-iso-cyanatomethyl-cyclohexane (=isophorondiisocyanate or IPDI), perhydro-2,4'- and -4,4'-diphenylmethandiisocyanate (HMDI or H12MDI), 1,4-diisocyanato-2,2,6-trimethylcyclohexane (TMCDI), 1,3- and 1,4-Bis-(isocyanatomethyl)cyclo-hexane, m- and p-xylylendiisocyanate (m- and p-XDI), m- and p-tetramethyle-1,3- and -1,4-xylylendiisocyanate (m- and p-TMXDI), bis-(1-isocyanato-1-methyl-ethyl)naphthaline, dimer- and trimer fatty acid isocyanate such as 3,6-bis-(9-isocya-natononyl)-4,5-di-(1-heptenyl)cyclohexen (dimeryldiisocyanat) and α, α, α', α', α ", α "-hexamethyl-1,3,5-mesitylentriisocyanate.

Especially suitable oligomers, polymers, and derivatives of monomeric polyisocyanates include those based on MDI, TDI, HDI, and IPDI. Commercially available versions of these include, for example, HDI-Biurete such as Desmodur^{®} N 100 and N 3200 (from Covestro), Tolonate^{®} HDB and HDB-LV (from Rhodia) and Duranate^{®} 24A-100 (from Asahi Kasei); HDI-Isocyanurate, such as Desmodur^{®} N 3300, ultra N 3300, N 3600, ultra N 3600 and N 3790 BA (all from Covestro), Tolonate^{®} HDT, HDT-LV and HDT-LV2 (from Rhodia), Duranate^{®} TPA-100 and THA-100 (from Asahi Kasei) and Coronate^{®} HX (von Nippon Polyurethane); HDI-Uretdione such as Desmodur^{®} N 3400 (von Covestro); HDI-Iminooxadiazindione such as Desmodur^{®} XP 2410 (von Covestro); HDI-Allophanate such as Desmodur^{®} VP LS 2102 (from Covestro); IPDI-Isocyanurate, for example as a solution such as Desmodur^{®} Z 4470 (from Covestro) or in solid form such as Vestanat^{®} T1890/ 100 (from Evonik Degussa); TDI-Oligomers such as Desmodur^{®} IL (from Covestro); as well as mixtures of isocyanurates based on TDI/HDI, for example Desmodur^{®} HL (von Covestro). Furthermore suitable are at standard room temperature liquid forms of MDI ("modified MDI"), which are mixtures of MDI with MDI derivatives, such as MDI-carbodiimides or MDI-uretonimines or MDI-urethanes that are commercially available under the trade names of Desmodur^{®} CD, Desmodur^{®} PF, Desmodur^{®} PC (all from Covestro) or Isonate^{®} M 143 (from Dow Chemicals), as well as mixtures of MDI and MDI-homologen (polymers of MDI or PMDI), which are commercially available unter the trade name of Desmodur^{®} VL, Desmodur^{®} VL50, Desmodur^{®} VL R10, Desmodur^{®} VL R20, Desmodur^{®} VH 20 N and Desmodur^{®} VKS 20F (all from Covestro), Isonate^{®} M 309, Voranate^{®} M 229 and Voranate^{®} M 580 (all from Dow Chemicals) or Lupranat^{®} M 10 R (from BASF). The oligomeric polyisocyanates discussed above are typically mixtures of substances having different degrees of oligomerization/polymerization and/or chemical structures and have an average isocyanate functionality in the range of 2.1 - 4.0.

The at least one organic polymer **P1** may comprise at least one isocyanate-functional aliphatic polyurethane polymer **P11,** preferably obtained by reacting the at least one polyol **PO** with at least one aliphatic monomeric polyisocyanate **ALPI.** Suitable aliphatic monomeric polyisocyanates include the aliphatic di- and tri-functional isocyanates as discussed above.

Isocyanate-functional aliphatic polyurethane polymers may be preferred over aromatic ones since the latter have in some cases been found out to form a gelled polymer structure in polyaddition reactions with the at least one hardener **H**, particularly with hardeners **H** containing amine groups. Adhesive compositions having a gelled polymer structure are heterogeneous mixtures, which cannot be coated on a surface to form a homogeneous adhesive film having a constant thickness. However, it has also been found out that the tendency of the isocyanate-functional aromatic polyurethane polymers to form a gelled polymer structure in reactions with the at least one hardener **H** may significantly be reduced by using them in mixtures with isocyanate-functional aliphatic polyurethane polymers.

The at least one isocyanate-functional aliphatic polyurethane polymer **P11** may comprise at least 25 wt.-%, preferably at least 50 wt.-%, more preferably at least 75 wt.-%, even more preferably at least 80 wt.-%, of the total weight of the at least one organic polymer **P1.**

The at least one organic polymer **P1** may comprise the at least one isocyanate-functional aliphatic polyurethane polymer **P11** and at least one isocyanate-functional aromatic polyurethane polymer **P12,** preferably obtained by reacting the at least one polyol **PO** with at least one aromatic monomeric polyisocyanate **ARPI.** Suitable aromatic monomeric polyisocyanates include the aromatic di- and tri-functional isocyanates as discussed above.

The at least one organic polymer **P1** may be an isocyanate-functional polyether urethane polymer, preferably obtained by the reaction of at least one polyether polyol **PO1** with the at least one polyisocyanate **PI**. The term "polyether urethane polymer" refers to a polymer that contains ether groups as repeating units and also contains urethane groups.

The may have:
- a number average molecular weight (Mₙ) in the range of 400 - 25000 g/mol, preferably 1500 - 20000 g/mol, more preferably 2000 - 10000 g/mol and/or
- hydroxyl number in the range of 5 - 112 mg KOH/g, preferably 8 - 75 mg KOH/g, more preferably 10 - 56 mg KOH/g.

Particularly suitable polyether polyols **PO1** include polyoxyalkylene diols and/ or polyoxyalkylene triols, especially the polymerization products of ethylene oxide or 1,2-propylene oxide or 1,2- or 2,3-butylene oxide or oxetane or tetrahydrofuran or mixtures thereof, which can be polymerized with using a starter molecule having two or three active hydrogen, in particular one, such as water, ammonia or a compound with several OH or NH groups, such as 1,2-ethanediol, 1,2- or 1,3-propanediol, neopentyl glycol, diethylene glycol, triethylene glycol, the isomeric dipropylene glycols or tripropylene glycols, the isomeric butanediols, pentanediols, hexanediols, heptanediols, octanediols, nonanediols, decanediols, undecanediols, 1,3- or 1,4-cyclohexanedimethanol, bisphenol A, hydrogenated bisphenol A, 1,1,1-trimethylolethane, 1,1,1-trimethylolpropane, glycerol or aniline, or mixtures of the aforementioned compounds.

Polyoxypropylene diols and ethylene oxide-terminated polyoxypropylene diols are particularly preferred. These are polyoxyethylene-polyoxypropylene mixed polyols, which are obtained, for example, by further alkoxylating polyoxypropylene diols with ethylene oxide after the polypropoxylation reaction has ended and as a result ultimately having primary hydroxyl groups.

The at least one compound **P** further may comprise at least one isocyanate-functional acrylic ester resin **P3,** preferably an aliphatic isocyanate-functional acrylic ester resin. Bi-functional reactants such as the resin **P3** may be used to add acrylate functionality to the reaction product **RP,** which enables covalent linking of the in-situ formed high molecular weight polymers to the polyacrylate network formed during the final curing reaction of the adhesive composition. This may improve the cohesion, reduce the cold creep, and improve the heat resistance of the adhesive composition.

The at least one isocyanate-functional acrylic ester resin **P3** may have:
- an average isocyanate-functionality determined according to ISO 14896-2009 standard method A in the range of 1.2 - 2.7, preferably 1.5 - 2.5, more preferably 1.7 - 2.2, even more preferably 1.9 - 2.1 and/or
- an isocyanate (NCO) content determined according to ISO 11909:2007 standard in the range of 5 - 25 %, preferably 10 - 20 %.

Suitable isocyanate-functional acrylic ester resins can be obtained, for example, by reacting monohydric alcohols containing one or more (meth)acryloyl group(s) with suitable polyisocyanates, preferably diisocyanates. Suitable isocyanate-functional acrylic ester resins are commercially available, for example, under the trade name of Laromer^{®} (from BASF) and under the trade name of Ebecryl^{®} (from Allnex).

The reaction mixture comprises, in addition to the at least one compound **P**, at least one hardener **H.**

According to one or more embodiments, the at least one hardener **H** has a molecular weight of not more than 7500 g/mol, more preferably not more than 5000 g/mol, even more preferably not more than 3500 g/mol, still more preferably not more than 2500 g/mol, most preferably not more than 1500 g/mol.

Preferably, the at least one hardener contains exactly two second type of functional groups. According to one or more embodiments, the at least one hardener **H** is a di-functional compound containing exactly two second type of functional groups.

According to one or more embodiments, the at least one hardener contains isocyanate-reactive groups, i.e. the second type of functional groups of the at least one hardener **H** are isocyanate-reactive groups.

Suitable isocyanate-reactive groups include amine groups, hydroxyl groups, and thiol groups. Preferably, the at least one hardener **H** contains exactly two isocyanate-reactive groups. According to one or more embodiments, the at least one hardener **H** is a di-functional compound containing exactly two isocyanate-reactive groups.

According to one or more embodiments, the at least one hardener **H** comprises at least one diamine **H1** and/or at least one diol **H2.**

The at least one diamine **H1** may be an aliphatic diamine, preferably having molecular weight of not more than 7500 g/mol, more preferably not more than 5000 g/mol, even more preferably not more than 3500 g/mol, still more preferably not more than 2500 g/mol, most preferably not more than 1500 g/mol.

Suitable aliphatic diamines for use as at least one diamine **H1** include, for example, the following commercially available amines:
- aliphatic, cycloaliphatic or arylaliphatic primary diamines, such as ethylenediamine, 1,2-propanediamine, 1,3-propanediamine, 2-methyl-1,2-propanediamine, 2,2-dimethyl-1,3-propanediamine, 1,3-butanediamine, 1,4-butanediamine, 1,3-pentanediamine (DAMP), 1,5-pentanediamine, 1,5-diamino-2-methylpentane (MPMD), 2-butyl-2-ethyl-1,5-pentanediamine (C11-neodiamine), 1,6-hexanediamine, 2,5-dimethyl-1,6-hexanediamine, 2,2,4- and 2,4,4-trimethylhexamethylenediamine (TMD), 1,7-heptanediamine, 1,8-octanediamine, 1,9-nonanediamine, 1,10-decanediamine, 1,11-undecanediamine, 1,12-dodecanediamine, 1,2-, 1,3- and 1,4-diaminocyclohexane, 1,4-diamino-2,2,6-trimethylcyclohexane (TMCDA), bis-(4-aminocyclohexyl)-methane (H12-MDA), bis-(4-amino-3-methylcyclohexyl)-methane, bis-(4-amino-3-ethylcyclohexyl)-methane, bis-(4-amino-3,5-dimethylcyclohexyl)-methane, bis-(4-amino-3-ethyl-5-methylcyclohexyl)-methane (M-MECA), 1-amino-3-aminomethyl-3,5,5-trimethylcyclohexane (= isophoronediamine or IPDA), 2- and 4-methyl-1,3-diaminocyclohexane and mixtures thereof, 1,3- and 1,4-bis-(aminomethyl)cyclohexane, 2,5-bis-(aminomethyl)-bicyclo[2.2.1]heptane (NBDA), 3,8-bis-(aminomethyl)-tricyclo[5.2.1.02,6]decane, 1,8-menthanediamine and 1,3- and 1,4-bis-(aminomethyl)benzene;
- ether group-containing aliphatic primary diamines, such as in particular bis-(2-aminoethyl) ether, 3,6-dioxaoctane-1,8-diamine, 4,7-dioxadecane-1,10-diamine, 4,7-dioxadecane-2,9-diamine, 4,9-dioxadodecane-1,12-diamine, 5,8-dioxadodecane-3,10-diamine, 4,7,10-trioxatridecane-1,13-diamine and higher oligomers of these diamines, 3,9-bis-(3-aminopropyl)-2,4,8,10-tetraoxaspiro[5.5]undecane, bis-(3-aminopropyl)polytetrahydrofuran and other polytetrahydrofuran diamines, Jeffamine^{®} RFD-270 (from Huntsman), as well as polyoxyalkylene diamines ("polyether-diamines"). The latter are products from the amination of polyoxyalkylene diols and are available, for example, under the name of Jeffamine^{®} (from Huntsman), under the name of Polyetheramine (from BASF) or under the name of PC Amine^{®} (from Nitroil). Especially suitable polyoxyalkylene diamines are Jeffamine^{®} D-205, Jeffamine^{®} D-230, Jeffamine^{®} D-400, Polyetheramine D 230, Polyetheramine D 400, PC Amine^{®} DA 250 and PC Amine^{®} DA 400.

The at least one diol **H2** may have a molecular weight of not more than 7500 g/mol, more preferably not more than 5000 g/mol, even more preferably not more than 3500 g/mol, still more preferably not more than 2500 g/mol, most preferably not more than 1500 g/mol.

Suitable diols for use as the at least one diol **H2** include, for example, ethylene glycol, 1,2- and 1,3-propanediol, 2,2-dimethyl-1,3-propanediol, 1,4-butanediol, 1,6-hexanediol, 2,2,4-trimethyl-1,6-hexanediol, 2,4,4-trimethyl-1,6-hexanediol, 1,7-heptanediol, 1,12-dodecanediol, 9,10-octadecene-1,12-diol, thiodiglycol, 1,18-octadecanediol, 2,4-dimethyl-2-propyl-1,3-heptanediol, 1,4-butanediol, 1,4-butanediol, diethylene glycol, triethylene glycol, and tetraethylene glycol. Hardeners with amine groups are generally preferred for use in the polyaddition reaction over hardenres with hydroxyl groups since reaction products **RP** containing urea linkages instead of urethane linkages have been found out to enable an especially strong thickening effect in the adhesive composition. Without being bound to any theory, it is believed that the viscosity increasing effect results from the inter- and intramolecular interactions of the urea moieties formed in isocyanate-amine reactions. The effect is significantly less pronounced if hardeners with hydroxyl groups are used since the reaction product **RP** would then contain urethane instead of urea moieties.

The at least one diamine **H1** may comprise at least 50 wt.-%, preferably at least 65 wt.-%, more preferably at least 75 wt.-%, even more preferably at least 85 wt.-%, still more preferably at least 90 wt.-%, of the total weight of the at least one hardener **H.**

The at least one diamine **H1** may be an aliphatic polyoxyalkylene diamine, preferably having a molecular weight in the range of 100 - 3500 g/mol, more preferably 150 - 2500 g/mol, even more preferably 200 - 1500 g/mol.

The adhesive composition according to the appended claims further comprises at least one free radical initiator I

The at least one free radical initiator I may comprise 0.1 - 7.5 wt.-%, preferably 0.2 -5 wt.-%, more preferably 0.35 - 3 wt.-%, even more preferably 0.5 - 2.5 wt.-%, of the total weight of the adhesive composition.

According to one or more preferred embodiments, the at least one free radical initiator I is a photoinitiator. Adhesive compositions containing an UV-radiation activated photoinitiator are typically characterized as "UV-curable adhesives". The term "curing" refers here to chemical reactions comprising forming of bonds resulting, for example, in chain extension and/or crosslinking of polymer chains.

Preferred type of the photoinitiator depends on the wavelength of the UV-radiation used for curing of the adhesive composition. Furthermore, it has been found out that films of adhesives containing high amounts of acrylic monomers and having a thickness of more than 100 µm are preferably cured by using UV-A irradiation having a wavelength in the range of 315 - 420 nm and particularly preferably with UVA-1 irradiation having a wavelength in the range of 340 - 400 nm. According to one or more embodiments, the at least one free radical initiator I is a photoinitiator that can be activated with UV-A irradiation, especially with UVA-1 irradiation.

Preferred photoinitiators showing absorption in the UVA-1 irradiation wavelength range include so called Norrish type I initiators, which are all phosphine oxides as well as some Norrish type II initiators.

Especially suitable Norrish type I photoinitiators include phospine oxides (PO), such as diphenyl(2,4,6-trimethylbenzoyl)phosphine oxide (TPO), ethyl phenyl(2,4,6-trimethylbenzoyl) phosphinate (TPO-L), phenylbis(2,4,6-trimethylbenzoyl)phosphine oxide (BAPO), bis-(2,6-dimethoxybenzoyl)-2,4,4-trimethylpentylphosphine oxide (BAPO-1), 2-benzyl-2-(dimethylamino)-4-morpholino-butyrophenone (BDMB), and phenyl-bis-(2,4,6-trimethylbenzoyl) phosphine oxide (BAPO-2). These are commercially available, for example, under the trade name of Lucirin TPO (from IGM Resins), Genocure (from Rahn AG), Speedcure (from Lambson (part of Arkema), Irgacure (from IGM Resins), Songcure (from Songwon), and from Bodo Möller Chemie.

Suitable Norrish type II photoinitiators include thiozanthones (TX), for example, 2-Isopropylthioxanthone (ITX), thioxanthone-anthracene (TX-A), 2,4-diethylthioxanthone (DETX), 2-Chlorothioxanthone (CTX), 2,4-Dimethylthioxanthone (RTX), 2,4-diisopropylthioxanthone (DITX), 1-Chloro-4-propoxythioxanthone (CPTX), polymeric TXs such as polymeric CPTX, polyTHF-di(thioxanthone-2-oxyacetate), and polymeric TX and dl-camphorquinine 2,3-bornanedione (CQ). These are commercially available, for example, under the trade names of Genocure^{®} (from Rahn GmbH), Omnirad^{®} (from IGM resins), and SpeedCure^{®} (from Lambson).

The at least one free radical initiator I may be a phosphine oxide based photoinitiator, preferably selected from the group consisting of diphenyl(2,4,6-trimethylbenzoyl)phosphine oxide (TPO), ethyl phenyl(2,4,6-trimethylbenzoyl) phosphinate (TPO-L), phenylbis(2,4,6-trimethylbenzoyl)phosphine oxide (BAPO), bis-(2,6-dimethoxybenzoyl)-2,4,4-trimethylpentylphosphine oxide (BAPO-1), and 2-benzyl-2-(dimethylamino)-4-morpholino-butyrophenone (BDMB).

Furthermore, the photoinitiators may be used in combination with synergists /activators that are well known to skilled person. The preferred type of the synergist depends on the type of the photoinitiator, for example the radical formation with Norrish type II initiators requires a hydrogen donor as a synergist. Examples of suitable synergists for the Norrish II initiators include, for example, amino benzoates, acrylated amines, and thiol compounds.

Preferably, the adhesive composition according to the appended claims further comprises:
d) At least one crosslinking agent **CA.**

It goes without saying that the at least one crosslinking agent **CA** is different from the at least one acrylic compound **A.**

The at least one crosslinking agent **CA** is preferably a polyfunctional acrylic compound containing at least two (meth)acryl groups, preferably having molecular weight of not more than 5000 g/mol, more preferably not more than 3500 g/mol, even more preferably not more than 1500 g/mol.

Suitable polyfunctional acrylic compounds include, for example, butanediol dimethacrylate, ethyleneglycol dimethacrylate, diethyleneglycol dimethacrylate, triethyleneglycol dimethacrylate, trimethylolpropane trimethacrylate, butanediol diacrylate, hexanediol diacrylate, trimethylolpropane triacrylate, and tripropyleneglycol diacrylate, trimethylolpropane ethoxy triacrylate, trimethylolpropane triacrylate, tripropylene glycol diacrylate, propylene glycol dimethacrylate, dipropylene glycol diacrylate, dipentaerythritol hydroxy pentaacrylate, neopentyl glycol propoxylate diacrylate, bisphenol A ethoxylate dimethacrylate, alkoxylated hexanediol diacrylate, ethoxylated bisphenol A diacrylate, ethoxylated bisphenol A dimethacrylate, ethoxylated trimethylolpropane triacrylate, propoxylated neopentyl glycol diacrylate, propoxylated glyceryl triacrylate, polybutadiene diacrylate, polybutadiene dimethacrylate, polyethylene glycol (PEG) di(meth)acrylates, polypropylene glycol (PPG) di(meth)acrylates, methoxy polyethylene glycol (MPEG) di(meth)acrylates, and polyethylene glycol polypropylene glycol (PEG/PPG) copolymer or block copolymer di(meth)acrylates, and polyurethane di(meth)acrylates.

The at least one crosslinking agent CA may be a difunctional acrylic compound containing exactly two (meth)acryl groups, preferably having a molecular weight of not more than 3500 g/mol, preferably not more than 2500 g/mol, more preferably not more than 1500 g/mol, even more preferably not more than 1000 g/mol.

The at least one crosslinking agent **CA** may comprise 0.01 - 5 wt.-%, preferably 0.05 - 3.5 wt.-%, more preferably 0.1 - 2.5 wt.-%, of the total weight of the adhesive composition.

According to one or more embodiments, the adhesive composition further comprises:
e) At least one vinyl compound **VC** and/or
f) At least one tackifying resin **TR.**

It goes without saying that the at least one vinyl compound **VC** is different from the at least one acrylic compound **A.** Suitable vinyl compounds include, for example, ethylenically unsaturated hydrocarbons with functional groups, vinyl esters, vinyl halides, vinylidene halides, nitriles of ethylenically unsaturated hydrocarbons, phosphoric acid esters, and zinc salts of (meth)acrylic acid.

Especially suitable vinyl compounds include the ones comprising at least one polar functional group, preferably at least one carboxyl group and/or hydroxyl group. Vinyl compounds containing polar functional groups, such as acrylic acid, may act as adhesion promoters and/or as physical (non-covalent, ionic) crosslinking agents when present in the adhesive composition.

Suitable vinyl compounds with polar functional groups for use as the at least one vinyl compound **VC** include, for example, acrylic acid, beta-acryloyloxypropionic acid, vinylacetic acid, fumaric acid, crotonic acid, aconitic acid, trichloroacrylic acid, and itaconic acid and hydroxyl group containing acrylic monomers, such as 2-hydroxyethyl(meth)acrylate, 2-hydroxypropyl(meth)acrylate, 3-hydroxypropyl (meth)acrylate, 2-hydroxybutyl(meth)acrylate, 4-hydroxybutyl butyl(meth)acrylate, 2-hydroxyhexyl(meth)acrylate, 6-hydroxy hexyl(meth) acrylate, 8-hydroxyoctyl(meth)acrylate, 10-hydroxydecyl (meth)acrylate, 12-hydroxylauryl(meth)acrylate, and adducts of hydroxyethyl acrylate with succinic acid anhydride.

It may be preferred that the at least one vinyl compound **VC** is not present in the reaction mixture but added to the adhesive composition after the formation of the reaction product **RP.**

The adhesive composition may further contain at least one tackifying resin **TR.**

The term "tackifying resin" designates in the present disclosure resins that in general enhance the adhesion and/or tackiness of an adhesive composition. The term "tackiness" designates in the present disclosure the property of a substance of being sticky or adhesive by simple contact. The tackiness can be measured, for example, as a loop tack. Preferred tackifying resins are tackifying at standard room temperature.

Examples of suitable tackifying resins to be used in the adhesive composition include natural resins, synthetic resins and chemically modified natural resins.

Examples of suitable natural resins and chemically modified natural resins include rosins, rosin esters, phenolic modified rosin esters, and terpene resins. The term "rosin" is to be understood to include gum rosin, wood rosin, tall oil rosin, distilled rosin, and modified rosins, for example dimerized, hydrogenated, maleated and/or polymerized versions of any of these rosins.

Suitable commercially available rosin ester resins include, for example, Sylvatac^{®} RAZ 100S, Sylvatac^{®} RE 85, Sylvatac^{®} RE 95, Sylvatac^{®} RE 98, Sylvatac^{®} RE 101RM, and Sylvatac^{®} RE 103S (all from Kraton); and Sylvalite^{®} RE 80HP, Sylvalite^{®} RE 85GB, Sylvalite^{®} RE 88F, Sylvalite^{®} RE 100F, Sylvalite^{®} RE 100L, Sylvalite^{®} RE 100S, Sylvalite^{®} RE 105L, Sylvalite^{®} RE 105 XL, Sylvalite^{®}, Sylvalite^{®} RE 110L, and Sylvalite^{®} RE 115, and Sylvares^{®} 1115 (all from Kraton).

Suitable terpene resins include copolymers and terpolymers of natural terpenes, such as styrene/terpene and alpha methyl styrene/terpene resins; polyterpene resins generally resulting from the polymerization of terpene hydrocarbons, such as the bicyclic monoterpene known as pinene, in the presence of Friedel-Crafts catalysts at moderately low temperatures; hydrogenated polyterpene resins; and phenolic modified terpene resins including hydrogenated derivatives thereof.

Suitable commercially available terpene resins include, for example, Sylvares^{®} TP 96, Sylvares^{®} TP 115P, Sylvares^{®} TP 300, Sylvares^{®} TP 2019, Sylvares^{®} TP 2040, Sylvares^{®} TP 2040HM, Sylvares^{®} TR 7115, Sylvares^{®} TR 7125, Sylvares^{®} TR B115, Sylvares^{®} TR M1115, and Sylvares^{®} ZT 106LT (all from Kraton).

The term "synthetic resin" refers to compounds obtained from the controlled chemical reactions such as polyaddition or polycondensation between well-defined reactants that do not themselves have the characteristic of resins. Monomers that may be polymerized to synthesize the synthetic resins may include aliphatic monomer, cycloaliphatic monomer, aromatic monomer, or mixtures thereof. Aliphatic monomers can include C₄, Cs, and C₆ paraffins, olefins, and conjugated diolefins. Examples of aliphatic monomer or cycloaliphatic monomer include butadiene, isobutylene, 1,3-pentadiene, 1,4-pentadiene, cyclopentane, 1-pentene, 2-pentene, 2- methyl-1-pentene, 2-methyl-2-butene, 2-methyl-2-pentene, isoprene, cyclohexane, 1,3-hexadiene, 1-4-hexadiene, cyclopentadiene, dicyclopentadiene, and terpenes. Aromatic monomer can include Cs, C₉, and C₁₀ aromatic monomer. Examples of aromatic monomer include styrene, indene, derivatives of styrene, derivatives of indene, coumarone and combinations thereof.

Suitable synthetic resins include synthetic hydrocarbon resins made by polymerizing mixtures of unsaturated monomers that are obtained as byproducts of cracking of natural gas liquids, gas oil, or petroleum naphthas. Synthetic hydrocarbon resins obtained from petroleum-based feedstocks are referred in the present disclosure as "hydrocarbon resins" or "petroleum hydrocarbon resins". These include also pure monomer aromatic resins, which are made by polymerizing aromatic monomer feedstocks that have been purified to eliminate color causing contaminants and to precisely control the composition of the product. Hydrocarbon resins typically have a relatively low average molecular weight (Mₙ), such in the range of 250 - 5000 g/mol and a glass transition temperature, determined by dynamical mechanical analysis (DMA) as the peak of the measured loss modulus (G") curve using an applied frequency of 1 Hz and a strain level of 0.1 %, of above 0 °C, preferably equal to or higher than 15 °C, more preferably equal to or higher than 30 °C.

Examples of suitable hydrocarbon resins include C5 aliphatic hydrocarbon resins, mixed C5/C9 aliphatic/aromatic hydrocarbon resins, aromatic modified C5 aliphatic hydrocarbon resins, cycloaliphatic hydrocarbon resins, mixed C5 aliphatic/cycloaliphatic hydrocarbon resins, mixed C9 aromatic/cycloaliphatic hydrocarbon resins, mixed C5 aliphatic/cycloaliphatic/C9 aromatic hydrocarbon resins, aromatic modified cycloaliphatic hydrocarbon resins, C9 aromatic hydrocarbon resins, polyterpene resins, and copolymers and terpolymers of natural terpenes as well hydrogenated versions of the aforementioned hydrocarbon resins. The notations "C5" and "C9" indicate that the monomers from which the resins are made are predominantly hydrocarbons having 4-6 and 8-10 carbon atoms, respectively. The term "hydrogenated" includes fully, substantially and at least partially hydrogenated resins. Partially hydrogenated resins may have a hydrogenation level, for example, of 50 %, 70 %, or 90 %.

Suitable hydrocarbon resins are commercially available, for example, under the trade name of Wingtack^{®} series, Wingtack^{®} Plus, Wingtack^{®} Extra, and Wingtack^{®} STS (all from Cray Valley); under the trade name of Escorez^{®} 1000 series, Escorez^{®} 2000 series, and Escorez^{®} 5000 series (all from Exxon Mobile Chemical); under the trade name of Novares^{®} T series, Novares^{®} TT series, Novares^{®} TD series, Novares^{®} TL series, Novares^{®} TN series, Novares^{®} TK series, and Novares^{®} TV series (all from Rain Carbon Inc); and under the trade name of Kristalex^{®}, Plastolyn^{®}, Piccotex^{®}, Piccolastic^{®} and Endex^{®} (all from Eastman Chemicals).

The at least one tackifying resin TR may be selected from the group consisting of rosins, rosin ester resins, phenolic modified rosin ester resins, and terpene resins.

The at least one tackifying resin TR may comprise at least 0.5 wt.-%, preferably at least 2.5 wt.-%, such as 0.5 - 35 wt.-%, preferably 1.5 - 30 wt.%, more preferably 5 - 25 wt.-%, of the total weight of the adhesive composition.

The adhesive composition may further comprise one or more additional constituents including, for example, waxes and plasticizers as well as one or more additives such as, for example, flame retardants, wetting agents, optical brighteners, pigments, dyes, and desiccants. Preferably, the amount of such additional constituents and additives is not more than 20 wt.-%, more preferably not more than 15 wt.-%, even more preferably not more than 10 wt.-%, based on the total weight of the adhesive composition.

The preferences given above for the at least one acrylic compound **A**, the at least one compound **P**, the at least one hardener **H**, the at least one free radical initiator **I,** the at least one crosslinking agent **CA,** the at least one vinyl compound **VC,** and to the at least one tackifying resin **TR,** apply equally to all other subjects of the present invention unless specified otherwise.

Another subject of the present invention is a method for preparing an adhesive composition, the method comprising steps of:
i) Providing a mixture comprising:
   - At least one first acrylic compound **A1**,
   - At least one compound **P**, and
   - At least one hardener **H**, and
ii) Conducting polyaddition reaction between the at least one compound **P** and the at least one hardener **H** to obtain a mixture containing a reaction product RP,
wherein the at least one compound P contains first type of functional groups that that react with second type of functional groups contained in the at least one hardener H in the polyaddition reaction and wherein the molar ratio of the first type of functional groups to the second type of functional groups in the mixture provided in step i) is in the range of 0.95 - 1.5.

The mixture provided in step i) can be obtained by mixing a first portion of the at least one first acrylic compound **A1** with the at least one compound **P** and a second portion with the at least one hardener **H** followed by combining of the thus obtained pre-mixtures. Alternatively, the at least one first acrylic compound **A1,** the at least one compound **P**, and the at least one hardener **H** may be mixed with each other in one step.

Preferably, the at least one first acrylic compound **A1** comprises at least 50 wt.-%, preferably at least 55 wt.-%, more preferably at least 60 wt.-%, even more preferably at least 65 wt.-%, still more preferably at least 70 wt.-%, of the total weight of the mixture provided in step i). According to one or more embodiments, the at least one first acrylic compound **A1** comprises 50 - 95 wt.-%, preferably 55 - 92.5 wt.-%, more preferably 60 - 90 wt.-%, even more preferably 65 - 90 wt.-%, still more preferably 70 - 90 wt.-%, of the total weight of the mixture provided in step i).

According to one or more embodiments, the viscosity of the mixture obtained from step ii) is at least 1.5 times, preferably at least 2 times, more preferably at least 5 times, even more preferably at least 10 times, as high as the viscosity of the mixture provided in step i).

Preferably, the mixture obtained from step ii) has a viscosity at 20 °C determined according to ISO 3219:1994 standard of at least 100 mPa s, even more preferably at least 125 mPa s, still more preferably at least 150 mPa s, most preferably at least 250 mPa s.

According to one or more embodiments, the mixture obtained from step ii) has a viscosity at 20 °C determined according to ISO 3219:1994 standard in the range of 100 - 35000 mPa·s, preferably 125 - 25000 mPa s, more preferably 125 - 15000 mPa s, even more preferably 150 - 15000 mPa·s.

Preferably, the at least one compound **P** contains first type of functional groups that that react with second type of functional groups contained in the at least one hardener **H** in the polyaddition reaction.

The molar ratio of the first type of functional groups to the second type of functional groups in the mixture provided in step i) is in the range of 0.95 - 1.5, preferably 0.97 - 1.2, more preferably 0.97 - 1.1, even more preferably 0.97 - 1.05. The polyaddition reaction between the at least one compound **P** and at least one hardener **H** can be conducted at a temperature in the range of 10 - 80 °C, preferably 15 - 70 °C, optionally in the presence of a catalyst.

According to one or more embodiments, the at least one compound **P** contains isocyanate groups, i.e. the first type of functional groups of the at least one compound **P** are isocyanate groups and the at least one hardener contains isocyanate-reactive groups, i.e. the second type of functional groups of the at least one hardener **H** are isocyanate-reactive groups.

The molar ratio of the isocyanate groups to the isocyanate-reactive groups in the mixture provided in step i) is preferably in the range of 0.97 - 1.2, more preferably 0.97 - 1.1, even more preferably 0.97 - 1.05.

Preferred embodiments of the at least one first acrylic compound **A1,** the at least one compound **P**, the at least one hardener **H**, and the reaction product **RP** have already been discussed above.

According to one or more embodiments, the method for preparing an adhesive composition comprises a further step of adding:
- At least one free radical initiator **I** and
- At least one second acrylic compound **A2** and/or
- At least one crosslinking agent **CA** and/or
- At least one vinyl compound **VC** and/or
- At least one tackifying resin **TR,**
to the mixture provided in step i) and/or to the mixture obtained from step ii).

Preferred embodiments for the at least one free radical initiator **I,** the at least one second acrylic compound **A2,** the at least one crosslinking agent **CA,** the at least one vinyl compound **VC,** and the at least one tackifying resin **TR,** have already been discussed above.

According to one or more embodiments, the method for preparing an adhesive composition comprises a step of adding the at least one free radical initiator **I** and the at least one crosslinking agent **CA** to the mixture provided in step i) and/or to the mixture obtained from step ii), preferably to the mixture obtained from step ii).

The at least one second acrylic compound **A2,** the at least one vinyl compound **VC,** and the at least one tackifying resin **TR,** if used, are preferably added to the mixture obtained from step ii).

Another subject of the present invention is an adhesive composition obtained by using the method for preparing an adhesive composition of the present invention.

Another subject of the present invention is an at least partially cured adhesive obtained by subjecting a mass of the adhesive composition of the present invention to UV-radiation, preferably to UV-A radiation characterized by a wavelength of 315 - 420 nm, more preferably to UVA-1 radiation characterized by a wavelength of 340 - 400 nm.

Still another subject of the present invention is a sealing device (1) comprising a carrier layer (2) and an adhesive layer (3) composed of the at least partially cured adhesive of the present invention coated on at least one of the major surfaces of the carrier layer (2).

The term "layer" refers in the present disclosure generally to a sheet-like element having first and second major surfaces, i.e. top and bottom surfaces, a width defined between longitudinally extending edges, and a thickness defined between the first and second major surfaces. Preferably, a layer has a length and width at least 15 times, preferably at least 25 times, more preferably at least 50 times greater than the thickness of the element.

The carrier layer may be a polymeric layer.

The term "polymeric layer" refers in the present disclosure to a layer comprising a continuous phase composed of one or more polymers.

There are no strict limitations for the width and length of the carrier layer, and these depend on the intended use of the sealing device. The term "width" and "length" refer to the two perpendicular dimensions measured in the horizontal plane of the first and second major surfaces of a sheet-like element. Generally, the "width" of a sheet like element is the smaller of the horizontal dimensions of the sheet-like element. Consequently, the "width" of the carrier layer refers to the minor dimension measured in the horizontal plane of the carrier layer in a direction perpendicular to the length of the carrier layer.

For example, the sealing device can be provided in form of a narrow strip, wherein the carrier layer has a width, for example, in the range of 10 - 500 mm, such as 50 - 350 mm, particularly 75 - 250 mm. The sealing device can also be provided in form of a broad sheet, wherein the carrier layer has a width, for example, in the range of 0.75 - 5 m, such as 1 - 3.5 m, particularly 1 - 2.5 m.

The carrier layer may have a thickness of 0.1 - 10 mm, preferably 0.15 - 5 mm, more preferably 0.25 - 3.5 mm, even more preferably 0.3 - 3 mm, still more preferably 0.35 - 2.5 mm.

The layer of adhesive composition can be coated on the surface of the carrier layer to form a continuous or a discontinuous adhesive layer. The term "continuous adhesive layer" refers in the present disclosure to layers consisting of one single area coated with an adhesive composition whereas the term "discontinuous adhesive layer" refers to layers consisting of two or more areas coated with an adhesive composition, which areas are not connected to each other to form a continuous layer.

Preferably, the adhesive layer has a thickness of at least 30 µm, preferably at least 50 µm, more preferably at least 100 µm, even more preferably at least 150 µm, such as 50 - 1500 µm, preferably 150 - 1250 µm, more preferably 250- 1000 µm, even more preferably 300 - 750 µm, still more preferably 350 - 700 µm and/or a coating weight of at least 30 g/m², preferably least 50 g/m², more preferably at least 100 g/m², even more preferably at least 150 g/m², such as 50 - 1000 g/m², preferably 100 - 750 g/m², more preferably 150 - 500 g/m², even more preferably 200 - 450 g/m².

According to one or more embodiments, the sealing device further comprises a release liner arranged on the outward facing surface of the adhesive layer opposite to the side of the carrier layer.

Preferably, the adhesive layer and the release liner are directly connected to each other over at least portion of their opposing major surfaces. The release liner may be used to prevent premature unwanted adhesion and to protect the adhesive layer from moisture, fouling, and other environmental factors. In case the sealing device is provided in form of rolls, the release liner enables ease of unwind without sticking of the adhesive to the back side of the sealing device.

The release liner may be sliced into multiple sections to allow portioned detachment of the liner from the adhesive layer.

Suitable materials for the release liner include Kraft paper, polyethylene coated paper, silicone coated paper as well as polymeric films, for example, polyethylene, polypropylene, and polyester films coated with polymeric release agents selected from silicone, silicone urea, urethanes, waxes, and long chain alkyl acrylate release agents.

The sealing device may comprise a first adhesive layer composed of the at least partially cured adhesive of the present invention coated on a first major surface of the carrier layer and a second adhesive layer coated on a second major surface of the carrier layer, wherein the second adhesive layer is preferably composed of the at least partially cured adhesive of the present invention.

Still another subject of the present invention is a method for producing a sealing device of the present invention, the method comprising steps of:
I) Providing a film of the adhesive composition of the present invention on a surface of a carrier layer or a transfer sheet,
II) Subjecting the adhesive film to UV-radiation thereby to effect at least partial curing of the adhesive composition, and
III) Optionally covering the outwardly facing surface of the at least partially cured adhesive film with a release liner.

Step II) of the method is preferably conducted under inert atmosphere to minimize the oxygen inhibition of the curing reaction. Furthermore, several layers of the adhesive composition can be coated on top of each other in step I) before the thus obtained adhesive film is subjected to UV-radiation in step II) of the method.

The step I) of the method may be applying the adhesive composition as an adhesive film on a surface of a transfer sheet and laminating the transfer sheet to a surface of the carrier layer such that the adhesive film is positioned between the transfer sheet and the carrier layer. In these embodiments, the transfer sheet is preferably composed of a material that is transparent to UV-radiation. It is also possible to subject the adhesive film to UV-radiation before the transfer sheet is laminated to a surface of the carrier layer. The transfer sheet may be delaminated from the surface of the carrier layer after the curing step II) has been conducted or left to the surface of the carrier layer to perform as a release liner.

The adhesive composition can be applied as a film onto a surface of the carrier layer or a transfer sheet by using any conventional coating technique, such as such as slot die coating, extrusion coating, roller coating, direct gravure coating, offset gravure coating, reverse gravure roll-coating, or by using powder dispersion, spray lamination, screen printing or ink jet printing techniques.

The method for producing a sealing device may comprise a further step IV) of winding the composite element obtained in step II) or III) into a roll.

The steps I) to IV) of the method can be conducted in a continuous coating process, where the adhesive composition is first coated onto a surface of the carrier or the transfer sheet layer using a line-coater. The carrier layer or a laminate of the carrier layer and the transfer sheet is then fed into a UV-curing station, where the adhesive film is subjected to a desired dosage of UV radiation, which may be supplied by using one or more UV lamps, such as mercury-type UV lamps or LED UV lamps. The desired dosage of UV energy can be supplied to the adhesive film by adjusting the intensity of the UV radiation and exposure time. The intensity of the UV radiation can be controlled by adjusting the power supplied to the respective UV-lamps and the distance between the lamps and the surface of the adhesive film. Exposure time can be controlled based on the line speed of the coater, i.e. the speed at which the substrate is passed through the UV curing station.

Following UV curing step, the transfer sheet, if used in the process, may be removed and a release liner may optionally be applied to cover the outer exposed surface of the at least partially cured adhesive film. The release liner may be supplied from a mandrel and removably mated to the surface of the at least partially cured adhesive film through pressure supplied by nip rolls. After application of the release liner, the composite element may be wound within winding step to provide wound rolls of the sealing device.

Still another subject may be a waterproofed substrate comprising a sealing device (1) according to the present invention, wherein at least a portion of one of the major surfaces of the carrier layer is adhered to a surface of a substrate (5) via the adhesive layer (3).

The substrate can be any above or below ground structure, which is to be sealed against penetration of moisture, water, or harmful gases such as radon or volatile organic compounds (VOC). The substrate can be a concrete, fiber concrete, metal, or a plywood substrate, or it may include an insulation board or a cover board and/or an existing polymeric membrane.

### Examples

The following materials as presented in Table 1 were used in the Examples.

**Table 1**

| | | |
|---|---|---|
| A1 | Ethylhexyl acrylate | Sigma Aldrich |
| A2 | Butyl acrylate | Sigma Aldrich |
| A3 | 2-(2-Ethoxyethoxy) Ethyl Acrylate | Arkema |
| P1 | Aromatic polyisocyanate pre-polymer based on toluene diisocyanate (TDI). | Covestro |
| P2 | Aliphatic polyisocyanate pre-polymer based on isophorone diisocyanate (IPDI) | Covestro |
| P3 | Aromatic polyisocyanate pre-polymer based on diphenylmethane diisocyanate | Covestro |
| P4 | Aromatic monomeric diisocyanate (MDI) | Covestro |
| H1 | Difunctional, primary polyetheramine, average molecular weight of about 230 g/mol | Huntsman |
| H2 | Difunctional, primary polyetheramine, average molecular weight of about 205 g/mol | Huntsman |
| H3 | Tetraethylenglycol | Sigma Aldrich |
| H4 | Diaminohexane | Sigma Aldrich |
| H5 | Linear polypropylene ether polyol | Covestro |
| CAT | Dibutyltin dilaurate (DBTL), > 17.5 wt.-% tin | TIB-Chemicals |
| CA | Hexamethylendiol diacrylate (HDDA) | Arkema |
| I | Diphenyl-(2,4,6-trimethylbenzoyl)-phosphinoxid (TPO) | Rahn AG |

### Preparation of adhesive compositions

The reference and exemplary adhesive compositions were prepared according to the following procedure.

Acrylic monomer mixtures (MM) containing the constituents as shown in Tables 2 and 3 were first prepared. A first portion of acrylic monomers was first mixed with the total amount of the compound **P** and a second portion of acrylic monomers was mixed with the total amount of the hardener **H.** The thus obtained pre-mixtures were then combined to provide a reaction mixture. Mixing of the liquid raw materials was conducted at standard room temperature and relative humidity of 50 % by stirring of the solutions. The polyaddition reaction between the polymer **P** and the hardener **H** was then conducted to obtain an acrylic monomer mixtures (MM) having an increased viscosity containing a reaction product **RP.** In case of acrylic monomer mixtures MM-1 to MM-11, the polyaddition reaction was conducted at standard room temperature and relative humidity of 50 % and in case of acrylic monomer mixture MM-12, the polyaddition reaction was conducted at a temperature of 70 °C.

The crosslinking agent **CA** and the initiator **I** were added to the obtained acrylic monomer mixtures (MM) homogenized by speed mixing for approx. 3 min at 2500 rpm. During and after the addition of the initiator **I** the mixtures were protected from direct sunlight and intensive irradiation to prevent premature curing.

### Viscosity

The viscosity of the acrylic monomer mixture (MM) after reaction of polymer **P** and hardener **H** at 20 °C was measured according to ISO 3219:1994 standard. The viscosity measurements were conducted by using Anton Paar Physica MCR 51 rheometer equipped with a cone plate having a diameter of 4 cm and using a share rate of 100 1/s .

### Molecular weight

Gel Permeation Chromatography (GPC) coupled with a concentration detector as a Refractive Index detector (RI) was used for the measurement of weight average molecular weights (M_{w}) of the reaction product **RP.**

The molar masses of the samples were characterized relative to polystyrene standards and were obtained from a single determination. For the GPC measurements with organic eluents and conventional calibration, the relative reproducibility standard deviations (S_{R}, ᵣₑₗ) were determined from round robin tests (see Messunsicherheit in der Kunststoffanalytik, Hanser Verlag München (2017). The S_{R}, ᵣₑₗ-value for M_{w} was 5.5 - 10 %. The M_{w} values were determined by integrating all "polymer peaks" except the peak at 210 Da or < 200 Da which was supposed to be the acrylic monomer solvent peak.

The following equipment was used in GPC measurements:
Columns: SDV 100, 1000, 10⁴ Å, (0.8 x 30 cm, 5 µm)
Eluent: Tetrahydrofuran (THF)
Flow: 1 mL/min
Column temperature: 35 °C
Detector: RID, 35 °C
Calibration: Relative to polystyrene
Standards: Polystyrene: 474-2'520'000 g/mol
Sample preparation: Ca 50-100 mg of the sample was dissolved with 10 mL of THF and filtrated with a 0.45 µm PTFE membrane filter

### Firm forming properties

The tested adhesive composition was coated as film having a thickness of 100 µm on a silicone coated paper. After a time period of 60 seconds, the quality of the coated adhesive film was judged based on visual observation as "not good", "ok", or "good". In case of "good" film forming properties, the adhesive composition can be easily coated on a surface of a substrate to form an adhesive film having a constant thickness showing no defects such as cracks or discontinuities.

### Shear testing

Adhesive compositions showing good film forming properties were further tested in shear testing.

The tested adhesive composition coated on a silicone coated paper was first cured by subjecting the adhesive film to UV-irradiation having a wave length in the range of 365 - 415 nm using a handheld UV device (HANDcure from IST Metz). The irradiation time was 90 seconds and the distance between UV source and substrate was approx. 10 cm.

The UV-cured adhesive film was then cut to yield samples having dimension of 25 mm x 25 mm. The samples were laminated to stainless steel plates having dimensions of 0.13 mm x 100 mm x 55 mm (thickness, length, width). After removal of the release liner, a polyester film (Hostaphan^{®} RNK 2600) having a width of 50 mm was adhered to the stainless steel plate via the cured adhesive film. The polyester film was positioned onto the stainless steel plate such that the pre-treated surface of the polyester film was contacted with the adhesive film. The thus obtained composite element was rolled over four times with a 5 kg hand held roller and stored for one hour at standard room temperature.

The composite elements were then suspended vertically from the free end of the stainless steel plate on a metal hook and a metal weight corresponding to a static load of 100 g was attached to another metal hook fixed to the free end of the polyester film. The length of the time period between attaching the metal weight to the polyester film and point of adhesive bond failure was recorded as the representative "shear strength" of the tested adhesive composition.

**Table 2: Compositions of mixtures in step i) of the method**

| **Composition [pbw]** | **MM-1** | **MM-2** | **MM-3** | **MM-4** |
|---|---|---|---|---|
| A1 | 57.05 | 57.35 | 57.45 | 57.5 |
| P1 | 17.12 | | | |
| P2 | | 17.21 | 16.09 | 17.26 |
| P3 | | | 1.15 | |
| **Total 1** | 74.14 | 74.56 | 74.69 | 74.76 |
| A1 | 23.64 | 23.62 | 23.29 | 23.57 |
| H1 | | 1.82 | 2.02 | 1.67 |
| **Total 2** | 97.78 | 100.00 | 100.00 | 100.00 |
| M_{w} of **RP** [g/mol] | n.a. | 95100 | 99300 | 57800 |
| ^{a}Viscosity @20 °C [mPa·s] | < 20 | 3245 | 8667 | 1207 |

| | | | | |
|---|---|---|---|---|
| ^{a} Viscosity of acrylic monomer mixture after reaction of compound **P** and hardener **H** | | | | |

**Table 3: Compositions of mixtures in step i) of the method**

| **Composition [pbw]** | **MM-5** | **MM-6** | **MM-7** | **MM-8** | **MM-9** | **MM-10** | **MM-11** | **MM-12** |
|---|---|---|---|---|---|---|---|---|
| A1 | | | | 28.66 | 57.40 | 38.72 | 63.96 | 57.01 |
| A2 | 57.33 | | | | | | | |
| A3 | | 57.34 | 65.87 | 28.66 | | | | |
| P1 | | | 9.25 | 17.19 | | | | |
| P2 | 17.20 | 17.20 | | | 17.22 | 33.2 | 11.63 | |
| P4 | | | | | | | | 1.14 |
| **Total 1** | 74.53 | 74.54 | 75.12 | 74.51 | 74.62 | 71.92 | 75.59 | 58.15 |
| A1 | | | | 11.66 | 23.64 | 22.65 | 23.85 | 23.89 |
| A2 | 23.65 | | | | | | | |
| A3 | | 23.66 | 23.83 | 11.66 | | | | |
| H1 | 1.82 | 1.80 | 1.05 | 2.17 | | | | |
| H2 | | | | | 1.74 | | | |
| H3 | | | | | | 5.41 | | |
| H4 | | | | | | | 0.56 | |
| H5 | | | | | | | | 17.94 |
| CAT | | | | | | 0.02 | | 0.02 |
| **Total 2** | 100.00 | 100.00 | 100.00 | 100.00 | 100.00 | 100.00 | 100.00 | 100.00 |
| M_{w} of **RP** [g/mol] | 134000 | 87500 | 179300 | n.a. | 87600 | 14200 | 115100 | 14900 |
| ^{a}Viscosity @20 °C [mPa·s] | 616 | 878 | 115 | 3145 | 2410 | 135 | 4407 | 44 |

| | | | | | | | | |
|---|---|---|---|---|---|---|---|---|
| ^{a} Viscosity of acrylic monomer mixture after reaction of compound **P** and hardener **H** | | | | | | | | |

**Table 4: Compositions and properties of tested adhesives**

| **Composition [pbw]** | **Ex-1** | **Ex-2** | **Ex-3** | **Ex-4** | **Ex-5** | **Ex-6** | **Ex-7** | **Ex-8** | **Ex-9** | **Ex-10** | **Ex-11** |
|---|---|---|---|---|---|---|---|---|---|---|---|
| MM-2 | 25 | | | | | | | | | | |
| MM-3 | | 25 | | | | | | | | | |
| MM-4 | | | 25 | | | | | | | | |
| MM-5 | | | | 25 | | | | | | | |
| MM-6 | | | | | 25 | | | | | | |
| MM-7 | | | | | | 25 | | | | | |
| MM-8 | | | | | | | 25 | | | | |
| MM-9 | | | | | | | | 25 | | | |
| MM-10 | | | | | | | | | 25 | | |
| MM-11 | | | | | | | | | | 25 | |
| MM-12 | | | | | | | | | | | 25 |
| CA | 0.1 | 0.1 | 0.1 | 0.1 | 0.1 | 0.1 | 0.1 | 0.1 | 0.1 | 0.1 | 0.1 |
| I | 0.4 | 0.4 | 0.4 | 0.4 | 0.4 | 0.4 | 0.4 | 0.4 | 0.4 | 0.4 | 0.4 |
| **Total 3** | 25.5 | 25.5 | 25.5 | 25.5 | 25.5 | 25.5 | 25.5 | 25.5 | 25.5 | 25.5 | 25.5 |
| **Adhesive properties** | | | | | | | | | | | |
| Film formation properties @100 µm | good | good | ok | good | good | good | good | ok | ok | ok | ok |
| Shear test @100 µm | 25 min | 41 min | 5 min | 167 min | >3d | > 3d | > 24 h | 14 min | > 24 h | 7 min | 1.5 min |

## Claims

1. An adhesive composition comprising:
a) At least one acrylic compound **A**,
b) A reaction product **RP** obtained by polyaddition reaction of at least one compound **P** and at least one hardener **H**, and
c) At least one free radical initiator **I,**
wherein the at least one acrylic compound **A** comprises at least 60 wt.-% of the total weight of the adhesive composition and the at least one compound **P** contains first type of functional group(s) that react with second type of functional group(s) contained in the at least one hardener **H** in the polyaddition reaction and wherein the polyaddition reaction between the at least one compound **P** and the at least one hardener **H** is conducted at a molar ratio of the first type of functional group to the second type of functional group of 0.95 - 1.5, and wherein the reaction product **RP** has a weight average molecular weight (M_{w}) determined by gel permeation-chromatography using polystyrene as standard of at least 15000 g/mol.

2. The adhesive composition according to claim 1 having a melting temperature determined by differential scanning calorimetry (DSC) according to ISO 11357-3:2018 standard using a heating rate of 2 °C/min of at or below 25 °C, preferably at or below 20 °C.

3. The adhesive composition according to any one of previous claims, wherein the at least one acrylic compound **A** contains exactly one (meth)acryl group.

4. The adhesive composition according to any one of previous claims, wherein the polyaddition reaction between the at least one compound **P** and the at least one hardener **H** is conducted at a molar ratio of the first type of functional group to the second type of functional group of 0.97 - 1.20.

5. The adhesive composition according to any one of previous claims, wherein the reaction product **RP** has a weight average molecular weight (M_{w}) of at least 25000 g/mol.

6. The adhesive composition according to any one of previous claims, wherein the at least one compound **P** has a weight average molecular weight (M_{w}) of not more than 15000 g/mol, preferably not more than 10000 g/mol and/or an average isocyanate-functionality determined according to ISO 14896-2009 standard method A in the range of 1.2 - 2.7, preferably 1.5 - 2.5.

7. The adhesive composition according to any one of previous claims, wherein the at least one compound **P** comprises at least one organic polymer **P1** containing isocyanate groups and/or at least one polyisocyanate **P2.**

8. The adhesive composition according to any one of previous claims, wherein the at least one hardener H has a molecular weight (as determined in the description) of not more than 7500 g/mol, preferably not more than 5000 g/mol.

9. The adhesive composition according to any one of previous claims, wherein the at least one hardener **H** comprises at least one diamine **H1** and/or at least one diol **H2.**

10. The adhesive composition according to any one of previous claims, wherein the at least one free radical initiator **I** is a photoinitiator.

11. The adhesive composition according to any one of previous claims further comprising:
d) At least one crosslinking agent **CA,** which is different from compound **A**, preferably a polyfunctional acrylic compound containing at least two (meth)acryl groups.

12. A method for preparing an adhesive composition according to any one of previous claims, the method comprising steps of:
i) Providing a mixture comprising:
- At least one first acrylic compound **A1,**
- At least one compound **P**, and
- At least one hardener **H**, and
ii) Conducting polyaddition reaction between the at least one compound **P** and the at least one hardener **H** to obtain a mixture containing a reaction product **RP,**
wherein the at least one compound **P** contains first type of functional groups that that react with second type of functional groups contained in the at least one hardener **H** in the polyaddition reaction and wherein the molar ratio of the first type of functional groups to the second type of functional groups in the mixture provided in step i) is in the range of 0.95 - 1.5.

13. The method according to claim 12, wherein the viscosity of the mixture obtained from step ii) is at least 1.5 times, preferably at least 5 times, as high as the viscosity of the mixture provided in step i).

14. The method according to claim 12 or 13, wherein the mixture obtained from step ii) has a viscosity at 20 °C determined according to ISO 3219:1994 standard in the range of 100 - 35000 mPa s, preferably 125 - 25000 mPa s.

15. The method according to any one of claims 12-14, wherein the molar ratio of the first type of functional groups to the second type of functional groups in the mixture provided in step i) is in the range of 0.97-1.2.

16. The method according to any one of claims 12-15, wherein the at least one compound **P** contains isocyanate groups and the at least one hardener **H** contains isocyanate-reactive groups.

17. The method according to any one of claims 12-16 comprising a further step of adding:
- At least one free radical initiator **I** and
- At least one second acrylic compound **A2** and/or
- At least one crosslinking agent **CA** and/or
- At least one vinyl compound **VC**, which is different from compound **A**, and/or
- At least one tackifying resin **TR,** to the mixture provided in step i) and/or to the mixture obtained from step ii).

18. An at least partially cured adhesive obtained by subjecting a mass of the adhesive composition according to any one of claims 1-11 to UV-radiation, preferably to UV-A radiation **characterized by** a wavelength of 315 - 420 nm.

19. A sealing device (1) comprising a carrier layer (2) and an adhesive layer (3) composed of the at least partially cured adhesive according to claim 18 coated on at least one of the major surfaces of the carrier layer (2).

20. A method for producing a sealing device comprising steps of:
I) Providing a film of the adhesive composition according to any one of claims 1-11 on a surface of a carrier layer or a transfer sheet,
II) Subjecting the adhesive film to UV-radiation thereby to effect at least partial curing of the adhesive composition, and
III) Optionally covering the outwardly facing surface of the at least partially cured adhesive film with a release liner.

## Patentansprüche

1. Kleberzusammensetzung, umfassend:
a) mindestens eine Acrylverbindung **A**,
b) ein Reaktionsprodukt **RP,** erhalten durch Polyadditionsreaktion mindestens einer Verbindung **P** und mindestens eines Härters **H**, und
c) mindestens einen Radikalinitiator **I,**
wobei die mindestens eine Acrylverbindung **A** zu mindestens 60 Gew.-% des Gesamtgewichts die Kleberzusammensetzung umfasst und die mindestens eine Verbindung **P** eine erste Art von funktioneller Gruppe bzw. funktionellen Gruppen enthält, die mit einer zweiten Art von funktioneller Gruppe bzw. funktionellen Gruppen reagiert, die in dem mindestens einen Härter **H** in der Polyadditionsreaktion enthalten ist, und wobei die Polyadditionsreaktion zwischen der mindestens einen Verbindung **P** und dem mindestens einen Härter **H** mit einem Molverhältnis der ersten Art von funktioneller Gruppe zu der zweiten Art von funktioneller Gruppe von 0,95 - 1,5 durchgeführt wird, und wobei das Reaktionsprodukt **RP** ein gewichtsmittleres Molekulargewicht (M_{w}), bestimmt durch Gelpermeationschromatographie unter Verwendung von Polystyrol als Standard, von mindestens 15000 g/mol aufweist.

2. Kleberzusammensetzung nach Anspruch 1 mit einer Schmelztemperatur, bestimmt durch Differenzrasterkalorimetrie (DSC) gemäß ISO-Norm 11357-3:2018 unter Verwendung einer Aufheizgeschwindigkeit von 2 °C/min, von gleich oder unter 25 °C, vorzugsweise gleich oder unter 20 °C.

3. Kleberzusammensetzung nach einem der vorstehenden Ansprüche, wobei die mindestens eine Acrylverbindung **A** genau eine (Meth)acryl-Gruppe enthält.

4. Kleberzusammensetzung nach einem der vorstehenden Ansprüche, wobei die Polyadditionsreaktion zwischen der mindestens einen Verbindung **P** und dem mindestens einen Härter **H** bei einem Molverhältnis der ersten Art von funktioneller Gruppe zu der zweiten Art von funktioneller Gruppe von 0,97 - 1,20 durchgeführt wird.

5. Kleberzusammensetzung nach einem der vorstehenden Ansprüche, wobei das Reaktionsprodukt **RP** ein gewichtsmittleres Molekulargewicht (M_{w}) von mindestens 25000 g/mol aufweist.

6. Kleberzusammensetzung nach einem der vorstehenden Ansprüche, wobei die mindestens eine Verbindung **P** ein gewichtsmittleres Molekulargewicht (M_{w}) von höchstens 15000 g/mol, vorzugsweise höchstens 10000 g/mol, und/oder eine durchschnittliche Isocyanat-Funktionalität, bestimmt gemäß ISO-Norm 14896-2009 Verfahren A, im Bereich von 1,2 - 2,7, vorzugsweise 1,5 - 2,5, aufweist.

7. Kleberzusammensetzung nach einem der vorstehenden Ansprüche, wobei die mindestens eine Verbindung **P** mindestens ein organisches Polymer **P1** umfasst, das Isocyanatgruppen und/oder mindestens ein Polyisocyanat **P2** enthält.

8. Kleberzusammensetzung nach einem der vorstehenden Ansprüche,
wobei der mindestens eine Härter **H** ein Molekulargewicht (wie in der Beschreibung bestimmt) von höchstens 7500 g/mol, vorzugsweise höchstens 5000 g/mol, aufweist.

9. Kleberzusammensetzung nach einem der vorstehenden Ansprüche, wobei der mindestens eine Härter **H** mindestens ein Diamin **H1** und/oder mindestens ein Diol **H2** umfasst.

10. Kleberzusammensetzung nach einem der vorstehenden Ansprüche, wobei der mindestens eine Radikalinitiator **I** ein Photoinitiator ist.

11. Kleberzusammensetzung nach einem der vorstehenden Ansprüche, ferner umfassend:
d) mindestens ein Vernetzungsmittel **CA,** das von Verbindung **A** verschieden ist, vorzugsweise eine polyfunktionelle Acrylverbindung, die mindestens zwei (Meth)acryl-Gruppen enthält.

12. Verfahren zum Herstellen einer Kleberzusammensetzung nach einem der vorstehenden Ansprüche, wobei das Verfahren die folgenden Schritte umfasst:
i) Bereitstellen eines Gemischs, umfassend:
- mindestens eine erste Acrylverbindung **A1**,
- mindestens eine Verbindung **P** und
- mindestens einen Härter **H** und
ii) Durchführen der Polyadditionsreaktion zwischen der mindestens einen Verbindung **P** und dem mindestens einen Härter **H**, um ein Gemisch zu erhalten, das ein Reaktionsprodukt **RP** enthält,
wobei die mindestens eine Verbindung **P** eine erste Art von funktionellen Gruppen enthält, die mit der zweiten Art von funktionellen Gruppen reagieren, die in dem mindestens einen Härter **H** in der Polyadditionsreaktion enthalten sind, und wobei das Molverhältnis der ersten Art von funktionellen Gruppen zu der zweiten Art von funktionellen Gruppen in dem Gemisch, das in Schritt i) bereitgestellt wird, im Bereich von 0,95 - 1,5 liegt.

13. Verfahren nach Anspruch 12, wobei die Viskosität das Gemischs, das aus Schritt ii) erhalten wird, mindestens 1,5-mal, vorzugsweise mindestens 5-mal, so hoch wie die Viskosität des Gemischs ist, das in Schritt i) bereitgestellt wird.

14. Verfahren nach Anspruch 12 oder 13, wobei das Gemisch, das aus Schritt ii) erhalten wird, eine Viskosität bei 20 °C, gemessen gemäß ISO-Norm 3219:1994, im Bereich von 100 - 35000 mPas, vorzugsweise 125 - 25000 mPa s, aufweist.

15. Verfahren nach einem der Ansprüche 12-14, wobei das Molverhältnis der ersten Art von funktionellen Gruppen zu der zweiten Art von funktionellen Gruppen in dem Gemisch, das in Schritt i) bereitgestellt ist, im Bereich von 0,97-1,2 liegt.

16. Verfahren nach einem der Ansprüche 12-15, wobei die mindestens eine Verbindung **P** Isocyanatgruppen enthält und der mindestens eine Härter **H** isocyanatreaktive Gruppen enthält.

17. Verfahren nach einem der Ansprüche 12-16, umfassend einen weiteren Schritt des Zugebens von:
- mindestens einem Radikalinitiator **I** und
- mindestens einer zweiten Acrylverbindung **A2** und/oder
- mindestens einem Vernetzungsmittel **CA** und/oder
- mindestens einer Vinylverbindung **VC,** die von Verbindung **A** verschieden ist, und/oder
- mindestens einem klebrigmachenden Harz **TR** zu dem Gemisch, das in Schritt i) bereitgestellt wird, und/oder zu dem Gemisch, das in Schritt ii) erhalten wird.

18. Zumindest teilweise gehärteter Kleber, der durch das Aussetzen einer Masse der Kleberzusammensetzung nach einem der Ansprüche 1-11 gegenüber UV-Strahlung, vorzugsweise gegenüber UV-A-Strahlung, erhalten wird, die durch eine Wellenlänge von 315-420 nm gekennzeichnet ist.

19. Dichtvorrichtung (1), umfassend eine Trägerschicht (2) und eine Kleberschicht (3), die aus dem zumindest teilweise gehärteten Kleber nach Anspruch 18 besteht, aufgetragen auf mindestens eine der Hauptoberflächen der Trägerschicht (2).

20. Verfahren zum Herstellen einer Dichtvorrichtung, umfassen die folgenden Schritte:
I) Bereitstellen eines Films der Kleberzusammensetzung nach einem der Ansprüche 1-11 auf einer Oberfläche einer Trägerschicht oder einer Transferfolie,
II) Aussetzen des Kleberfilms gegenüber UV-Strahlung, wodurch eine zumindest teilweise Härtung der Kleberzusammensetzung bewirkt wird, und
III) gegebenenfalls Bedecken der nach außen gewandten Oberfläche des zumindest teilweise gehärteten Kleberfilms mit einem Trennpapier.

## Revendications

1. Composition d'adhésif comprenant :
a) au moins un composé acrylique A,
b) un produit de réaction RP obtenu par réaction de polyaddition d'au moins un composé P et d'au moins un agent de durcissement H, et
c) au moins un initiateur de radicaux libres I,
l'au moins un composé acrylique A représentant au moins 60 % en poids du poids total de la composition d'adhésif et l'au moins un composé P contenant un premier type de groupe(s) fonctionnel(s) qui réagit/réagissent avec un deuxième type de groupe(s) fonctionnel(s) contenu(s) dans l'au moins un agent de durcissement H dans la réaction de polyaddition et, la réaction de polyaddition entre l'au moins un composé P et l'au moins un agent de durcissement H étant conduite à un rapport molaire du premier type de groupe fonctionnel sur le deuxième type de groupe fonctionnel de 0,95 à 1,5, et, le produit de réaction RP ayant un poids moléculaire moyen en poids (M_{w}), déterminé par chromatographie à perméation de gel en utilisant du polystyrène en tant que référence, d'au moins 15 000 g/mole.

2. Composition d'adhésif selon la revendication 1 ayant une température de fusion déterminée par calorimétrie différentielle à balayage (DSC) selon la norme ISO 11357-3:2018 en utilisant une vitesse de chauffage de 2 °C/min de ou inférieure à 25 °C, préférablement de ou inférieure à 20 °C.

3. Composition d'adhésif selon l'une quelconque des revendications précédentes, l'au moins un composé acrylique A contenant exactement un groupe (méth)acryle.

4. Composition d'adhésif selon l'une quelconque des revendications précédentes, la réaction de polyaddition entre l'au moins un composé P et l'au moins un agent de durcissement H étant conduite à un rapport molaire du premier type de groupe fonctionnel sur le deuxième type de groupe fonctionnel de 0,97 à 1,20.

5. Composition d'adhésif selon l'une quelconque des revendications précédentes, le produit de réaction RP ayant un poids moléculaire moyen en poids (M_{w}) d'au moins 25 000 g/mole.

6. Composition d'adhésif selon l'une quelconque des revendications précédentes, l'au moins un composé P ayant un poids moléculaire moyen en poids (M_{w}) de pas plus de 15 000 g/mole, préférablement de pas plus de 10 000 g/mole et/ou une fonctionnalité moyenne d'isocyanate déterminée selon la norme ISO 14896-2009 méthode A dans la plage de 1,2 à 2,7, préférablement de 1,5 à 2,5.

7. Composition d'adhésif selon l'une quelconque des revendications précédentes, l'au moins un composé P comprenant au moins un polymère organique P1 contenant des groupes isocyanate et/ou au moins un polyisocyanate P2.

8. Composition d'adhésif selon l'une quelconque des revendications précédentes, l'au moins un agent de durcissement H ayant un poids moléculaire (tel que déterminé dans la description) de pas plus de 7 500 g/mole, préférablement de pas plus de 5 000 g/mole.

9. Composition d'adhésif selon l'une quelconque des revendications précédentes, l'au moins un agent de durcissement H comprenant au moins une diamine H1 et/ou au moins un diol H2.

10. Composition d'adhésif selon l'une quelconque des revendications précédentes, l'au moins un initiateur de radicaux libres I étant un photoinitiateur.

11. Composition d'adhésif selon l'une quelconque des revendications précédentes comprenant en outre :
d) au moins un agent de réticulation CA, qui est différent du composé A, préférablement un composé acrylique polyfonctionnel contenant au moins deux groupes (méth)acryle.

12. Procédé pour la préparation d'une composition d'adhésif selon l'une quelconque des revendications précédentes, le procédé comprenant les étapes de :
i) fourniture d'un mélange comprenant :
- au moins un premier composé acrylique A1,
- au moins un composé P, et
- au moins un agent de durcissement H, et
ii) conduite d'une réaction de polyaddition entre l'au moins un composé P et l'au moins un agent de durcissement H pour obtenir un mélange contenant un produit de réaction RP,
l'au moins un composé P contenant un premier type de groupes fonctionnels qui réagissent avec un deuxième type de groupes fonctionnels contenus dans l'au moins un agent de durcissement H dans la réaction de polyaddition et, le rapport molaire du premier type de groupes fonctionnels sur le deuxième type de groupes fonctionnels dans le mélange fourni dans l'étape i) étant dans la plage de 0,95 à 1,5.

13. Procédé selon la revendication 12, la viscosité du mélange obtenu de l'étape ii) étant au moins 1,5 fois, préférablement au moins 5 fois, aussi élevée que la viscosité du mélange fourni dans l'étape i).

14. Procédé selon la revendication 12 ou 13, le mélange obtenu de l'étape ii) ayant une viscosité à 20 °C déterminée selon la norme ISO 3219:1994 dans la plage de 100 à 35 000 mPa·s, préférablement de 125 à 25 000 mPa·s.

15. Procédé selon l'une quelconque des revendications 12 à 14, le rapport molaire du premier type de groupes fonctionnels sur le deuxième type de groupes fonctionnels dans le mélange fourni dans l'étape i) étant dans la plage de 0,97 à 1,2.

16. Procédé selon l'une quelconque des revendications 12 à 15, l'au moins un composé P contenant des groupes isocyanate et l'au moins un agent de durcissement H contenant des groupes réactifs envers un isocyanate.

17. Procédé selon l'une quelconque des revendications 12 à 16 comprenant une étape supplémentaire d'ajout :
- d'au moins un initiateur de radicaux libres I et
- d'au moins un deuxième composé acrylique A2 et/ou
- d'au moins un agent de réticulation CA et/ou
- d'au moins un composé vinylique VC, qui est différent du composé A, et/ou
- d'au moins une résine tackifiante TR, au mélange fourni dans l'étape i) et/ou au mélange obtenu de l'étape ii) .

18. Adhésif au moins partiellement durci obtenu en soumettant une masse de la composition d'adhésif selon l'une quelconque des revendications 1 à 11 à un rayonnement UV, préférablement un rayonnement UV-A **caractérisé par** une longueur d'onde de 315 à 420 nm.

19. Dispositif d'étanchéification (1) comprenant une couche de support (2) et une couche d'adhésif (3) composée de l'adhésif au moins partiellement durci selon la revendication 18 revêtu sur au moins l'une des surfaces principales de la couche de support (2).

20. Procédé pour la production d'un dispositif d'étanchéification comprenant les étapes de :
I) application d'un film de la composition d'adhésif selon l'une quelconque des revendications 1 à 11 sur une surface d'une couche de support ou d'une feuille de transfert,
II) soumission du film d'adhésif à un rayonnement UV pour effectuer ainsi un durcissement au moins partiel de la composition d'adhésif, et
III) éventuellement recouvrement de la surface dirigée vers l'extérieur du film d'adhésif au moins partiellement durci avec une doublure détachable.
